(19) Europäisches Patentamt
European Patent Office
Office européen des brevets

(11) Veröffentlichungsnummer : **0 071 168**
**B1**

(12) # EUROPÄISCHE PATENTSCHRIFT

(45) Veröffentlichungstag der Patentschrift : **30.01.85**

(51) Int. Cl.⁴ : **C 09 B 62/513**, D 06 P 3/66, D 06 P 3/10

(21) Anmeldenummer : **82106565.3**

(22) Anmeldetag : **21.07.82**

(54) **Wasserlösliche Disazoverbindungen und neue Bis-(aminophenoxy)-äthan-Verbindungen mit faserreaktiven Gruppen als Tetrazokomponenten, Verfahren zur Herstellung dieser Verbindungen und Verwendung der Disazoverbindungen als Farbstoffe.**

(30) Priorität : **25.07.81 DE 3129401**

(43) Veröffentlichungstag der Anmeldung : **09.02.83 Patentblatt 83/06**

(45) Bekanntmachung des Hinweises auf die Patenterteilung : **30.01.85 Patentblatt 85/05**

(84) Benannte Vertragsstaaten : **CH DE FR GB IT LI**

(56) Entgegenhaltungen :
**EP-A- 0 014 432**
**DE-A- 1 443 877**
**DE-B- 1 204 666**
**FR-A- 2 375 301**

(73) Patentinhaber : **HOECHST AKTIENGESELLSCHAFT**
**Postfach 80 03 20**
**D-6230 Frankfurt am Main 80 (DE)**

(72) Erfinder : **Fuchs, Hermann, Dr.**
**Altenhainer Strasse 2**
**D-6240 Königstein/Taunus (DE)**
Erfinder : **Filzinger, Klaus**
**Hermann-Friesen-Strasse 15**
**D-6238 Hofheim am Taunus (DE)**

**EP 0 071 168 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft das technische Gebiet der faserreaktiven Disazofarbstoffe.

Aus der Europäischen Patentanmeldungs-Veröffentlichung Nr. 0 014 432 sind bereits Disazofarbstoffe bekannt, die aus zwei Kupplungskomponenten mit einer faserreaktiven Gruppe und einer Tetrazokomponente aufgebaut sind. Diese Tetrazokomponente stellt eine Bis-(aminophenoxy)-methan-Verbindung dar, deren Benzolkerne durch eine Nitrogruppe substituiert sein können. Zwar haben diese bekannten Farbstoffe im allgemeinen gute Eigenschaften, jedoch ist sowohl deren Beständigkeit gegen Säure als auch die der Tetrazokomponente nicht zufriedenstellend.

Mit der vorliegenden Erfindung wurden nunmehr neue, verbesserte, wasserlösliche, symmetrische Disazoverbindungen der allgemeinen Formel (1)

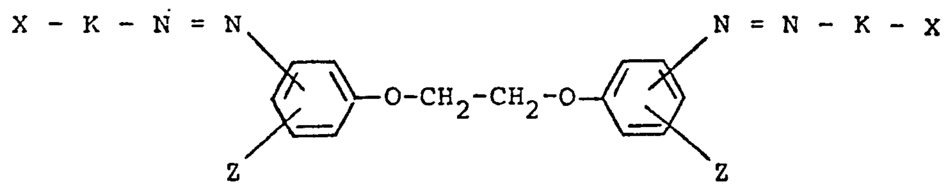

(1)

gefunden, in welcher die zweifach auftretenden Formelglieder K, X und Z jeweils eine einander identische Bedeutung besitzen und die Gruppen Z an die beiden Benzolkerne jeweils in ortho- oder jeweils in para-Stellung zum Äthylendioxy-Substituenten sowie die Azogruppen und die Gruppen Z in den Benzolkernen jeweils zueinander meta-ständig gebunden sind und

K der Rest einer Kupplungskomponente ist, die mindestens eine Sulfogruppe (entsprechend der allgemeinen Formel $—SO_3M$ mit M der nachstehend genannten Bedeutung), wie 1, 2, 3 oder 4 Sulfogruppen, bevorzugt 1, 2 oder 3 Sulfogruppen, und/oder mindestens eine Sulfatogruppe (entsprechend der allgemeinen Formel $—OSO_3M$ mit M der nachstehend genannten Bedeutung), wie 1 oder 2 Sulfatogruppen, und/oder eine Carboxygruppe (entsprechend der allgemeinen Formel —COOM mit M der nachstehenden Bedeutung) enthält, — wobei hiervon die Sulfogruppe bevorzugt ist —,

M ein Wasserstoffatom oder ein Alkalimetall, wie Lithium und insbesondere Natrium oder Kalium, oder das Äquivalent eines Erdalkalimetalls, wie des Calciums, ist,

X ein Wasserstoffatom oder eine faserreaktive Gruppe bedeutet und

Z eine Gruppe der Formel $—SO_2—CH{=}CH_2$ oder der Formel $—SO_2—CH_2—CH_2—Y$ ist, in welcher

Y einen anorganischen oder organischen, im wäßrigen Medium alkalisch oder sauer eliminierbaren Rest bedeutet oder für die Hydroxygruppe steht, wobei

X auch die Bedeutung von Z haben kann.

Sofern X nicht die faserreaktive Gruppe Z selbst ist, ist der Rest X an den Rest K über eine Aminogruppe der Formel —NR—, in welcher R ein Wasserstoffatom oder eine Alkylgruppe von 1 bis 4 C-Atomen bedeutet, verknüpft.

Die neuen Disazoverbindungen der allgemeinen Formel (1) können in Form der freien Säure als nauch in Form ihrer Salze vorliegen. Bevorzugt sind sie in Form ihrer Salze, insbesondere der Alkali- und Erdalkalimetallsalze, wie der Natrium-, Kalium- und Calciumsalze. Sie finden bevorzugt in Form der Alkalimetallsalze Verwendung zum Färben und Bedrucken von vorzugsweise Fasermaterialien.

Anorganische oder organische Reste Y der faserreaktiven Gruppe $—SO_2—CH_2—CH_2—Y$ sind beispielsweise ein Acyloxy-Rest einer gegebenenfalls durch eine oder zwei niedere Alkylgruppen und/oder Sulfogruppen substituierten Arylcarbonsäure oder Arylsulfonsäure, wie der Benzoyloxy-, ein Sulfobenzoyloxy-, der Benzolsulfonyloxy- oder ein Toluolsulfonyloxy-Rest, des weiteren eine N-Arylamidosulfonyloxy-Gruppe und eine gegebenenfalls substituierte Phenoxygruppe und insbesondere eine Dialkylaminogruppe mit Alkylgruppen von jeweils 1 bis 4 C-Atomen, wobei die Alkylgruppen gleiche oder verschiedene Bedeutung haben und je eine Carboxygruppe oder nur eine der Alkylgruppen eine Carboxygruppe oder eine Sulfogruppe enthalten können, wie z. B. die Diäthylamino-, die N-Methyl-N-β-sulfoäthylamino-Gruppe oder die Aminodiessigsäure-Gruppe, und bevorzugt beispielsweise ein Alkanoyloxyrest mit 2 bis 5 C-Atomen im Alkylrest, wie der Acetyloxyrest, ein niederer Alkansulfonyloxyrest, wie der Methansulfonyloxyrest, ein Halogenatom, wie das Fluor-, Chlor- oder Bromatom, eine Thiosulfatogruppe (entsprechend der allgemeinen Formel $—S—SO_3M$ mit M der oben angegebenen Bedeutung), eine Phosphatogruppe (entsprechend der allgemeinen Formel $—O—PO_3M_2$ mit M der oben angegebenen Bedeutung), die Amidosulfonyloxygruppe der Formel $—O—SO_2NH_2$ und eine Sulfatogruppe (entsprechend der allgemeinen Formel $—OSO_3M$ mit M der oben angegebenen Bedeutung). Besonders bevorzugt von diesen faserreaktiven Gruppen Z ist die Vinylsulfonylgruppe und insbesondere die β-Sulfatoäthylsulfonyl-Gruppe.

Die vorstehend und auch nachstehend genannten Arylreste sind bevorzugt die Phenylgruppe oder eine Naphthylgruppe, wobei die Phenylgruppe noch durch einen oder zwei Substituenten aus der Gruppe mit Methoxy, Äthoxy, Methyl, Äthyl, Chlor, Carboxy und Sulfo substituiert sein kann und die 1- oder 2-Naphthylgruppe noch durch eine Methyl-, Äthyl-, Methoxy-, Äthoxy- oder Carboxygruppe oder ein Chloratom und/oder eine, zwei oder drei Sulfogruppen substituiert sein kann.

Der hier verwendete Ausdruck « niederes » bedeutet im vorstehenden als auch im nachstehenden Gebrauch, daß die hiermit bezeichnete Gruppe oder der hiermit bezeichnete Rest aus einer Alkylgruppe von 1 bis 4 C-Atomen besteht oder einen Alkylrest oder Alkylenrest von 1 bis 4 C-Atomen enthält. Niedere Alkylgruppen, die durch einen Arylrest substituiert sind, sind bevorzugt die Phenäthyl- und insbesondere die Benzylgruppe.

Bevorzugt enthalten die Kupplungskomponenten K eine, zwei oder drei Sulfogruppen. Als Kupplungskomponenten K kommen bevorzugt solche mit einer phenolischen oder enolischen Hydroxygruppe oder mit einer an einen aromatischen carbocyclischen oder aromatischen heterocyclischen Rest gebundenen Aminogruppe infrage.

K ist als Rest einer Kupplungskomponente insbesondere :

— der 1-Amino-naphthyl- oder 2-Amino-naphthyl-Rest, die mindestens eine Sulfogruppe enthalten und, wie in Formel (1) angegeben, gegebenenfalls durch eine faserreaktive Gruppe, die über die genannte Aminogruppe —NR— an K gebunden sein kann, substituiert sein können und deren Aminogruppen jeweils durch niederes Alkyl, durch Aryl substituiertes niederes Alkyl und/oder Arylreste mono- oder disubstituiert sein können ;

— der 1-Naphthol- oder 2-Naphtholrest, die mindestens eine Sulfogruppe enthalten und, wie in Formel (1) angegeben, gegebenenfalls durch eine faserreaktive Gruppe, die über die genannte Aminogruppe —NR— an K gebunden sein kann, substituiert sein können und die durch eine Aminogruppe oder durch eine durch niederes Alkyl, durch Aryl substituiertes niederes Alkyl und/oder Aryl substituierte Aminogruppe oder durch eine Acylaminogruppe oder eine Acyl-($C_1$-$C_2$)-alkyl-amino-Gruppe substituiert sein können, wobei die Acylreste jeweils insbesondere den Rest einer gegebenenfalls halogensubstituierten, wie chlorsubstituierten, Alkancarbonsäure mit 1-5 C-Atomen im Alkylrest, einer gegebenenfalls halogensubstituierten, wie chlorsubstituierten, Arylalkancarbonsäure mit 1 bis 3 C-Atomen im Alkanteil oder einer gegebenenfalls halogensubstituierten, wie chlorsubstituierten, Arylcarbonsäure bedeuten, wie beispielsweise den Acetyl-, Chlorpropionyl-, Benzoyl-, Chlorbenzoyl- und Phenylpropionyl-Rest, oder den Rest einer gegebenenfalls halogensubstituierten, wie chlorsubstituierten, N-Aryl-carbaminsäure, wie den N-Chlor-phenyl-carbamoyl-Rest, darstellen ;

— ein Acetoacetylanilid- oder Acetoacetyl-N-naphthylamid-Rest, in welchen der Phenylrest und der Naphthylrest eine, zwei oder drei Sulfogruppen enthält und, wie in Formel (1) angegeben, gegebenenfalls durch eine faserreaktive Gruppe, die über die genannte Aminogruppe —NR— an K gebunden sein kann, substituiert ist und noch zusätzlich durch 1 oder 2 Substituenten, wie insbesondere Fluor, Chlor, Brom, niederes Alkyl, niederes Alkoxy, Carboxy, niederes Carbalkoxy, wie Carbäthoxy oder Carbomethoxy, Carbamoyl, durch niederes Alkyl und/oder Phenyl mono- oder disubstituiertes Carbamoyl, Amino und niederes N-Alkylamino, substituiert sein kann ;

— der 5-Aminopyrazol-4-yl- oder 5-Pyrazolon-4-yl-Rest, die in 3-Stellung durch Methyl, Carboxy, Carbamoyl, niederes Carbalkoxy, wie Carbomethoxy und Carbäthoxy, oder Phenyl substituiert sind und in 1-Stellung einen Phenylkern oder Naphthylkern gebunden enthalten, wobei der Phenylrest durch 1 oder 2 Sulfogruppen und, wie in Formel (1) angegeben, gegebenenfalls durch eine faserreaktive Gruppe, die über die genannte Aminogruppe —NR— an K gebunden sein kann, substituiert ist und durch 1 oder 2 Substituenten aus der Gruppe niederes Alkyl, niederes Alkoxy, Chlor, Brom, Nitro, Acetylamino, Amino, niederes N-Alkylamino und Carboxy substituiert sein kann und der Naphthylrest durch 1, 2 oder 3 Sulfogruppen und, wie in Formel (1) angegeben, gegebenenfalls durch eine faserreaktive Gruppe, die über die genannte Aminogruppe —NR— an K gebunden sein kann, substituiert ist und durch einen Substituenten aus der Gruppe niederes Alkyl, niederes Alkoxy, Nitro, Acetylamino, Amino, niederes N-Alkylamino und Carboxy substituiert sein kann ;

— ein sulfogruppenhaltiger 6-Hydroxy-pyrid-2-on-Rest oder dessen niederen N-Alkyl- oder N-Arylderivate, wobei der Pyrid-2-on-Ring noch durch niederes Alkyl substituiert sein kann ;

— ein sulfogruppenhaltiger Indol-Rest, der in 2-Stellung durch niederes Alkyl oder Aryl substituiert sein kann ;

— ein Rest der allgemeinen Formel (2a) oder (2b)

(2a)

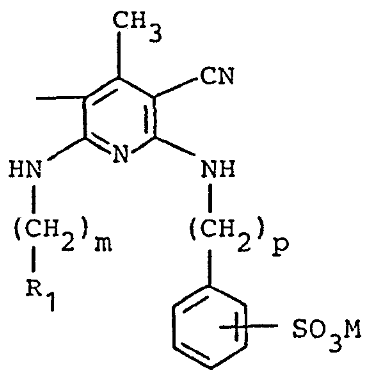

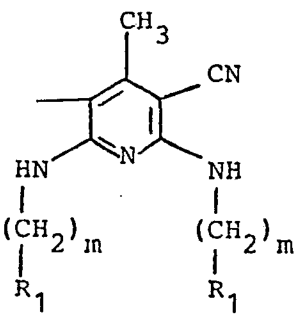

(2b)

worin m jeweils eine ganze Zahl von 2 bis 4, p eine ganzė Zahl von Null bis 4 und $R_1$ eine Sulfogruppe oder eine Sulfatogruppe bedeuten, wobei jedes $R_1$ und m in Formel (2b) jeweils die gleiche Bedeutung hat, wobei X hier H ist.

Bevorzugt stellt —K—X einen Rest der Formel (3a), (3b), (3c), (3d), (3e), (3f), (3g), (3h) oder (3i)

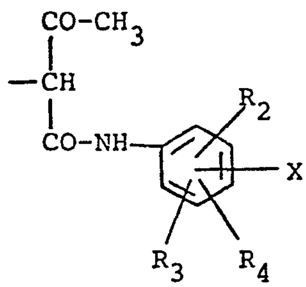
(3a)

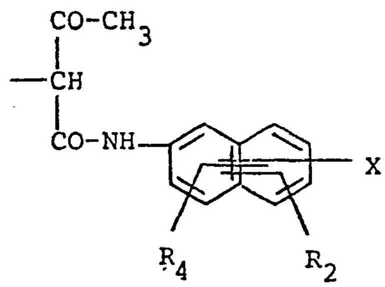
(3b)

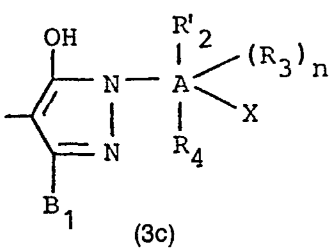
(3c)

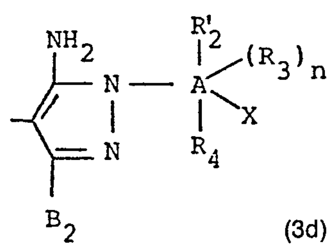
(3d)

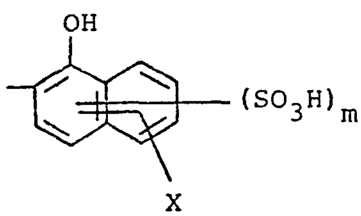
(3e)

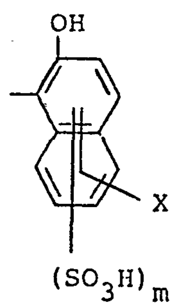
(3f)

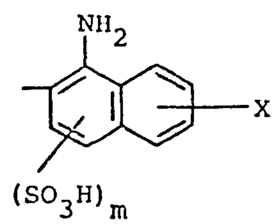
(3g)

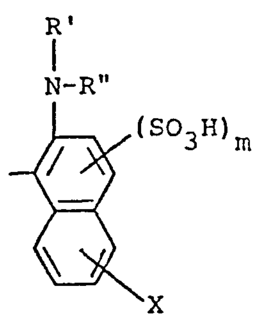
(3h)

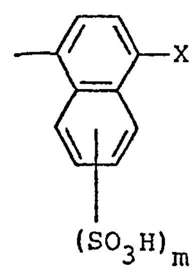
(3i)

dar, in welchen die Formelreste folgende Bedeutungen haben :

X hat die obige, insbesondere bevorzugte, Bedeutung ;

n ist die Zahl 1 oder 2, vorzugsweise 1 ;

$R_2$ ist ein Wasserstoffatom, eine niedere Alkylgruppe, wie insbesondere eine Methyl- oder Äthylgruppe, eine niedere Alkoxygruppe, wie insbesondere eine Methoxy- oder Äthoxygruppe, ein Chlor- oder Bromatom oder eine Sulfogruppe ;

$R_3$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, oder ein Chlor- oder Bromatom ;

$R_4$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, oder, bevorzugt, eine Sulfogruppe ;

A ist der Benzolkern oder ein Naphthalinkern ;

$R'_2$ ist ein Wasserstoffatom, eine niedere Alkylgruppe, wie insbesondere eine Methyl- und Äthylgruppe, eine niedere Alkoxygruppe, wie insbesondere eine Methoxy- oder Äthoxygruppe, ein Chlor- oder Bromatom, eine niedere Alkanoylaminogruppe, wie eine Acetylaminogruppe, oder eine Sulfogruppe ;

R' ist ein Wasserstoffatom oder eine niedere Alkylgruppe ;

R'' ist ein Wasserstoffatom, eine niedere Alkylgruppe oder ein Phenylrest, der durch 1 oder 2 Substituenten aus der Gruppe niederes Alkyl, niederes Alkoxy, Chlor, Brom und Sulfo substituiert sein kann ;

m steht für die Zahl 1 oder 2 ;

$B_1$ ist eine niedere Alkylgruppe, bevorzugt Methylgruppe, eine Carboxygruppe, eine Carbomethoxy- oder Carbäthoxygruppe und

$B_2$ ist eine niedere Alkylgruppe, bevorzugt die Methylgruppe, eine Carbomethoxy- oder Carbäthoxygruppe, eine Carbonamidgruppe oder ein Phenylrest, der durch 1 oder 2 Substituenten aus der Gruppe niederes Alkyl, niederes Alkoxy, Chlor, Brom und Sulfo substituiert sein kann,
wobei $R'_2$, $R_2$, $R_3$, $R_4$, R', R'' und $B_1$ bzw. $B_2$ gleich oder verschieden voneinander sein können und wobei diese Formelglieder in diesen Formeln (3) der Kupplungskomponenten mindestens einmal eine Sulfogruppe darstellen.

Faserreaktive Gruppen X, die in den erfindungsgemäßen Disazoverbindungen der allgemeinen Formel (1) enthalten sein können, sind die zahlreich in der Literatur bekannten faserreaktiven Reste der carbocyclischen und heterocyclischen sowie aliphatischen Reihe.

Der faserreaktive Rest X, sofern er über die oben definierte Gruppe —NR— an K gebunden ist, bedeutet insbesondere einen bekannten faserreaktiven Acylrest einer niederen Halogenalkan- oder niederen Halogenalken-carbonsäure, einer niederen Halogenalkan-mono- oder -di-carbonsäure, einer Nitrohalogenbenzol-sulfonsaüre oder -carbonsäure, einer Chloräthylsulfonylbenzol-carbonsäure, einer Halogencyclobutyl- oder-cyclobutenyl-carbon- oder -acrylsäure, einer Halogenäthylsulfonyl-endomethylen-cyclohexan-carbonsäure, einen bekannten faserreaktiven Acylrest einer im Heterocyclus halogensubstituierten benzoheterocyclischen Carbon- oder Sulfonsäure, wie einer Halogenbenzoxazolcarbonsäure, einer Halogenbenzthiazolcarbonsäure oder -sulfonsäure, weiterhin den faserreaktiven Acylrest einer aromatisch-heterocyclischen Carbonsäure oder Sulfonsäure, deren Heterocyclus bevorzugt 2 oder 3 Stickstoffatome enthält und bevorzugt ein 6-gliedriger Heterocyclus ist, so der Pyridazin-, Pyridazinon-, Pyrimidin-, Phthalazin-, Chinazolin- oder Chinoxalin-Rest, wobei der Heterocyclus durch eine oder zwei faserreaktive Abgangsgruppen, bevorzugt aus der Gruppe Halogen, wie Chlor und Fluor, niederes Alkylsulfonyl und Sulfo, substituiert ist und durch 1, 2 oder 3 weitere Substituenten substituiert sein kann, wie beispielsweise aus der Gruppe niederes Alkyl, niederes Alkoxy, niederes Carbalkoxy, niederes Halogenalkyl, niederes Hydroxyalkyl, Carboxy, Sulfo, Aryloxy, niederes Alkylmercapto, Arylmercapto, niederes Alkanoyl, Cyan, Nitro und primäre, sekundäre und tertiäre Aminogruppen mit aliphatischen, heterocyclischen und/oder aromatischen Resten, des weiteren den faserreaktiven Rest eines Heterocyclus mit 2 oder 3 Stickstoffatomen, insbesondere eines sechsgliedrigen Heterocyclus, so des Pyrimidin-, Pyridazin- oder Triazinrings, wobei der Heterocyclus durch eine oder zwei faserreaktive Abgangsgruppen, bevorzugt aus der Gruppe Halogen, wie Chlor und Fluor, niederes Alkylsulfonyl und Sulfo, substituiert ist und durch einen weiteren Substituenten substituiert sein kann, wie beispielsweise aus der Gruppe niederes Alkyl, niederes Alkoxy, niederes Carbalkoxy, niederes Halogenalkyl, niederes Hydroxyalkyl, Carboxy, Sulfo, Aryloxy, niederes Alkylmercapto, Arylmercapto, niederes Alkanoyl, Cyan, Nitro und primäre, sekundäre und tertiäre Aminogruppen mit aliphatischen, heterocyclischen und/oder aromatischen Resten.

Weiterhin kann X die vorgenannte Bedeutung des Restes Z besitzen.

Faserreaktive Reste X, die über die oben definierte Gruppe —NR— an K gebunden sind, sind beispielsweise der Chloracetyl-, Bromacetyl-, β-Chlorpropionyl-, β-Brompropionyl-, a,β-Dichlor- oder a,β-Dibrompropionyl-Rest, der Acylrest einer Chlormaleinsäure, der β-Sulfatoäthylsulfonyl-, der Acryloyl-, der β-Chlor- und β-Bromacryloyl-, der a-Chlor- und a-Bromacryloyl-, der a,β-Dichlor- und a,β-Dibromacryloyl-, der Trichloracrylolyl-, der Chlorcrotonyl-, Propionyl-, 3,5-Dinitro-4-chlorbenzol-sulfonyl- oder -carbonyl-, der 2,2,3,3-Tetrafluor-cyclobutyl-acryloyl-, 2,2,3,3-Tetrafluorcyclobutyl-carbonyl-, 2,3,3-Trifluorcyclobut-1-en-yl-acryloyl-, 3-Nitro-4-chlorbenzolsulfonyl- oder -carbonyl-, der β-Chloräthylsulfonyl-endomethylen-cyclohexancarbonyl- und 3-β-Chloräthylsulfonylbenzoyl-Rest, der 2-Chlorbenzoxazolcarbonyl-, 2-Chlorbenzthiazol-carbonyl- und -sulfonyl-Rest, die sechsgliedriegen heterocyclischen Säurereste (Acylreste) der β-(4,5-Dichlor-pyridazin-6-ón-1-yl)-propionsäure, 1,4-Dichlorphthalazincarbon- und -sulfonsäure, 2,4-Dichlorchinazolin-carbon- und -sulfonsäure, 2,3-Dichlorchinoxalincarbon- und -sulfonsäure, der 2,6-Bis-methyl-sulfonyl-pyridin-4-carbonsäure, 3,6-Dichlorpyridazin-5-carbonsäure, 2,4-Dichlorpyrimidin-6-carbonsäure, 2,4-Dichlorpyrimidin-5-carbonsäure, 2,6-Dichlor- oder 2,6-Dibrompyrimidin-4-carbonsäure und -sulfonsäure, der 2,6-Dichlor- oder 2,6-Dibrom-pyrimidin-5-carbonsäure und -sulfonsäure, der 2-Chlorbenzthiazol-6-carbonsäure, 2-Chlorbenzthiazol-6-sulfonsäure, der β-Sulfatoäthylsulfonyl-, β-Chloräthylsulfonyl-, β-Phosphatoäthylsulfonyl-, β-Thiosulfatoäthylsulfonyl- und der Vinylsulfonylrest, des weiteren der Des-halogen-, Des-sulfo- oder Des-alkyl-sulfonyl-Rest der β-(4,5-Dichlor-pyridazin-6-on-1-yl)-propionsäure, der 1,4-Dichlorphthalazin-carbonsäure und -sulfonsäure, 2,4-Dichlorchinazolincarbonsäure und -sulfonsäure, 2,3-Dichlorchinoxalincarbonsäure und -sulfonsäure, des 2-Methylsulfonyl-4-chlor-6-methyl-pyrimidins, 2,4-Bis-methylsulfonyl-6-methylpyrimidins, 2,4,6-Tri- oder 2,4,5,6-Tetrabrom-pyrimidins, 2-Methylsulfonyl-4,5-dichlor-6-methyl-pyrimidins, einer 2,4-Dichlorpyrimidin-5-sulfonsäure, eines 5-Nitro- oder 5-Cyan-2,4,6-trichlorpyrimidins, der 2,6-Bis-methylsulfonyl-pyridin-4-carbonsäure, des 2,4-Dichlor-5-chlormethyl-6-methyl-pyrimidins, 2,4-Dibrom-5-brommethyl-6-methyl-pyrimidins, 2,4-Dichlor-5-brommethyl-pyrimidins, 2,4-Dibrom-5-chlormethyl-pyrimidins, 2,5,6-Trichlor-4-methylpyrimidins, 2,6-Dichlor-4-trichlormethyl-pyrimidins, 2,4-Bis-methylsulfonyl-5-chlor-6-methylpyrimidins, 2,4,6-Trimethylsulfonyl-1,3,5-triazins, 2,4-Dichlorpyrimidins, 3,6-Dichlorpyrimidins, der 3,6-Dichlorpyridazin-5-carbonsäure, des 2,6-Dichlor- oder 2,6-Dibrom-4-carbäthoxypyrimidins, 2,4,5-Trichlorpyrimidins, der 2,4-Dichlorpyrimidin-6-carbonsäure, 2,4-Dichlorpyrimidin-5-carbonsäure, des 2,6-Dichlor- oder 2,6-Dibrompyrimidin-4-carbonsäureamids, der 2,6-Dichlor- oder 2,6-Dibrompyrimidin-4-carbonsäure- und -sulfonsäure, des 2,6-Dichlor- oder 2,6-Dibrompyrimidin-5-carbonsäure- und -sulfonsäureamids, der 2,6-Dichlor- oder 2,6-Dibrompyrimidin-5-carbonsäure- und -sulfonsäure, des 2,4,5,6-Tetrachlor-pyrimidins, 5-Brom-2,4,6-trichlorpyrimidins, 5-Acetyl-2,4,6-trichlorpyrimidins, 5-Nitro-6-methyl-2,4-dichlor-pyrimidins, 2,4,6-Trichlor-5-brompyrimidins, 2,4,5,6-Tetrafluorpyrimidins, 4,6-Difluor-5-chlorpyrimidins, 2,4,6-Trifluor-5-chlorpyrimidins, 2,4,5-Trifluorpyrimidins, 2,4,6-Trichlor-1,3,5-triazins, 2,4,6-Tribrom-1,3,5-triazins, 2,4,6-Trifluor-1,3,5-triazins oder eines 4,6-Difluor-1,3,5-triazins, 4,6-Dibrom-1,3,5-triazins und 4,6-Dichlor-1,3,5-triazins, wobei diese Dihalogentriazine in 2-Stellung noch durch einen Rest aus der Gruppe Aryl, wie Phenyl, niederes Alkyl, wie Methyl oder Äthyl, aliphatisches Mercapto, wie niederes Alkylmercapto, aromatisches Mercapto, wie Arylthio, beispielsweise Phenylthio, aliphatisches Oxy, wie niederes Alkoxy, aromatisches Oxy, wie Aryloxy, beispielsweise Phenoxy und Naphthoxy, primäres Amino, sekundäres und tertiäres Amino mit aliphatischen, heterocyclischen und aromatischen Resten, substituiert sein können.

Solche Reste, die in 2-Stellung an den Triazinkern des 4,6-Dihalogens gebunden sind und durch die entsprechenden, wie nachstehenden, Verbindungen durch Umsetzung mit Trihalogen-triazinen hergestellt werden können, sind beispielsweise die Äther-Reste von beispielsweise nachfolgenden aliphatischen und aromatischen Hydroxy-Verbindungen :

niedere Thioalkanole, niedere Alkoxyalkanole, niedere Alkanole, wie Methanol, Äthanol und iso-Propanol, Glykolsäure, Phenol, Chlor- und Nitrophenole, Phenolcarbon- und -sulfonsäuren, Naphthole, Naphtholsulfonsäuren, und beispielsweise die Thioäther-Reste von beispielsweise aliphatischen und aromatischen Mercapto-Verbindungen, wie der Thioglykolsäure und Thiophenole.

Aminogruppen, die in 2-Stellung des Triazins enthalten sein können, sind insbesondere neben, der primären Aminogruppe —$NH_2$, aliphatische und/oder aromatische Aminogruppen, die eine acylierbare Amino- oder Hydroxygruppe enthalten können, wie die Aminoreste des Hydroxylamins, Hydrazins, Sulfophenyl-hydrazins, der Äthanolamine und Propanolamine, weiterhin die Aminoreste des Methylamins, Äthylamins, iso-Propylamins, Methoxyäthylamins, Methoxypropylamins, Dimethylamins, Methylphenylamins, Äthylphenylamins, Chloräthylamins, Benzylamins, Cyclohexylamins, Morpholins, Piperidins und Piperazins sowie vorzugsweise des N,N-β-(β'-Chloräthylsulfonyl)-äthylamins, ebenso von Sauerstoffätherverbindungen, die noch eine acylierbare Aminogruppe enthalten können, wie des Hydroxylamins.

Von den faserreaktiven Resten X, die über die genannte Aminogruppe mit R in der Regel gleich Wasserstoff an die Kupplungskomponente K gebunden sind, können beispielsweise die folgenden als bevorzugt genannt werden : der β-Chloräthylsulfonyl-endomethylen-cyclohexancarbonyl-Rest, der 2,3-Dichlorchinoxalincarbonyl-Rest, der β-Sulfatoäthylsulfonyl-, β-Chloräthylsulfonyl-, β-Phosphatoäthylsulfonyl-, β-Thiosulfatoäthylsulfonyl- und der Vinylsulfonyl-Rest (wobei diese letztgenannten, in β-Stellung substituierten Äthylsulfonylreste und der Vinylsulfonylrest über eine Methylamino- oder Äthylaminogruppe an K gebunden sind), der Des-methylsulfonyl- oder Des-chlor-Rest des 2-Methylsulfonyl-4,5-dichlor-6-methyl-pyrimidins, der 2,4-Dichlorpyrimidin-6-carbonyl-Rest, der Des-halogen-Rest des 2,4,6-Trifluor-5-chlor-pyrimidins, der 2,4-Dichlor-1,3,5-triazin-6-yl-Rest und der 2,4-Difluor-1,3,5-triazin-6-yl-Rest, wobei die in 2-Stellung befindlichen Halogenatome dieser Dihalogeno-triazin-Reste durch eine niedere Alkylmercaptogruppe, eine niedere Alkoxygruppe, die primäre Aminogruppe, durch den Morpholino-, Piperidino- oder Piperazino-Rest oder durch eine mono- oder disubstituierte Aminogruppe ausgetauscht sein können, wobei in der letztgenannten sekundären oder tertiären Aminogruppe deren N-Substituenten aus der Menge niederes Alkyl, niederes Alkyl, das durch Chlor, Hydroxy, niederes Alkoxy, niederes Alkoxyalkoxy, Carboxy, Sulfo, Sulfato, Phenyl und durch Methoxy, Methyl, Äthoxy, Äthyl, Carboxy, Chlor und/oder Sulfo substituiertes Phenyl substituiert ist, Cyclohexyl, Phenyl, Naphthyl und durch Chlor, Methoxy, Äthoxy, Methyl, Äthyl und/oder Sulfo substituiertes Phenyl ausgewählt sind.

Weiterhin ist der Formelrest X bevorzugt im Falle, daß er direkt, ohne Zwischenschaltung einer Aminogruppe, an den aromatischen Rest der Kupplungskomponente gebunden ist, bevorzugt der β-Chloräthylsulfonyl-, β-Thiosulfatoäthylsulfonyl-, β-Phosphatoäthylsulfonyl- und insbesondere der Vinylsulfonyl- und β-Sulfatoäthylsulfonyl-Rest.

Die vorliegende Erfindung betrifft weiterhin ein Verfahren zur Herstellung der vorgenannten Disazoverbindungen der allgemeinen Formel (1), welches dadurch gekennzeichnet ist, daß man ein Tetrazoniumsalz einer bisher noch nicht bekannten und nachfolgend beschriebenen, erfindungsgemäßen Diaminoverbindung der allgemeinen Formel (4)

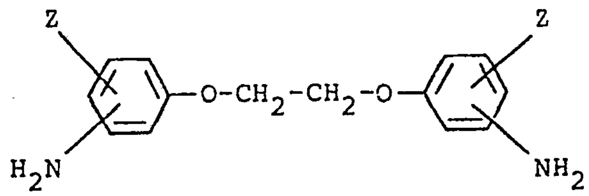

(4)

in welcher Z die obengenannte jeweils gleiche Bedeutung besitzt, wobei die Gruppen Z an die beiden Benzolkerne jeweils in ortho- oder jeweils in para-Stellung zum Äthylendioxy-Substituenten und die Aminogruppen und die Gruppen Z in den Benzolkernen jeweils zueinander meta-ständig gebunden sind, mit der äquivalenten (zweifach äquimolaren) Menge einer Kupplungskomponente der allgemeinen Formel (5)

$$H—K—X \quad (5)$$

in welcher K und X die oben angegebenen Bedeutungen haben, kuppelt.

Für den Fall, daß Z in Formel (4) die β-Hydroxyäthylsulfonyl-Gruppe bedeutet, kann diese zur β-Sulfatoäthylsulfonyl-Gruppe verestert werden, wobei man die Veresterung beispielsweise mittels konzentrierter Schwefelsäure während der Tetrazotierungsreaktion (hier mittels Nitrosylschwefelsäure) der Diamine der allgemeinen Formel (4) durchführen kann. Die Veresterung kann aber auch nach der Tetrazotierungs- und Kupplungsreaktion bei der gebildeten, die β-Hydroxyäthylsulfonyl-Gruppe enthaltenden Disazoverbindung der allgemeinen Formel (1), — so bspw. auch im Falle, daß die verwendete Kupplungskomponente der Formel (5) eine β-Hydroxyäthylsulfonyl-Gruppe als Formelrest X enthielt, — mit konzentrierter Schwefelsäure oder mit Amidosulfonsäure in Pyridin oder Picolin erfolgen. Insbesondere wird die letztgenannte Veresterung in den Fällen durchgeführt, in denen die in der Endstufe erzeugten Disazoverbindungen der allgemeinen Formel (1) keine Reste enthalten, die sich durch Einwirkung von Säuren abspalten lassen.

Die Disazoverbindungen der allgemeinen Formel (1), in welchen X einen über die obengenannte und definierte Aminogruppe der Formel —NR— gebundenen faserreaktiven Rest bedeutet, können erfindungsgemäß auch in der Weise hergestellt werden, daß man ein Tetrazoniumsalz einer oben beschriebenen erfindungsgemäßen Diaminoverbindung der allgemeinen Formel (4) mit der äquivalenten (zweifach äquimolaren) Menge einer Kupplungskomponente der allgemeinen Formel (6)

$$H - K - \underset{\substack{|\\ R}}{NH} \quad (6)$$

in welcher K und R die oben angegebenen Bedeutungen besitzen, kuppelt und anschließend diese Disazoverbindung mit jeweils einer Aminogruppe der oben definierten Formel —NHR in den Resten der Kupplungskomponenten K mit der äquivalenten (zweifach äquimolaren) Menge eines die faserreaktive Gruppe X enthaltenden Acylierungsmittels der allgemeinen Formel (7)

$$Hal—X \quad (7)$$

in welcher X die obengenannte Bedeutung besitzt und Hal ein Halogenatom, wie bevorzugt Brom- und insbesondere Chloratom, ist, in an und für sich bekannter Verfahrensweise solcher Acylierungsreaktionen, wie beispielsweise bei einer Temperatur zwischen 0 und 80 °C, vorzugsweise zwischen 20 und 60 °C, und in Gegenwart eines säurebindenden Mittels, wie beispielsweise Natriumacetat, Natriumhydrogencarbonat, Natriumcarbonat und Natriumhydroxid, zur erfindungsgemäßen Disazoverbindung der Formel (1) umsetzt.

Die Kupplungsreaktion der tetrazotierten Diamine der Formel (4) mit den Kupplungskomponenten der Formel (5) oder (6) wird in an und für sich für solche Kupplungsreaktionen bekannter und dem Fachmann geläufiger Weise durchgeführt, so, abhängig von der verwendeten Kupplungskomponente, im schwach alkalischen bis sauren, wäßrigen Milieu, vorzugsweise bei einem pH-Bereich von 1 bis 7 und bei einer Temperatur zwischen − 5 und + 25 °C, unter Zusatz eines säurebindenden Mittels, wie beispielsweise Natriumacetat, Natriumhydrogencarbonat, Natriumcarbonat oder wäßriger Natronlauge.

Die erfindungsgemäß hergestellten Verbindungen der allgemeinen Formel (1) werden nach bekannten Methoden aus ihren Syntheselösungen abgeschieden bzw. isoliert, so entweder durch Aussalzen aus dem Reaktionsmedium mittels Elektrolyten, wie beispielsweise Natrium- oder Kaliumchlorid, vorteilhaft nach Einstellung der Syntheselösung auf einen pH-Wert im Bereich von 3,5 bis 7,0, oder aber durch Eindampfen, beispielsweise durch Sprühtrocknen, der Reaktionsmischung nach Einstellung des pH auf einen Wert zwischen 5,0 und 7,0. In den Fällen, in denen in der anfallenden Reaktionslösung größere Mengen an Sulfationen vorliegen, empfiehlt es sich, diese vor der Sprühtrocknung als schwerlösliche Salze, beispielsweise als Calciumsulfat, abzuscheiden.

In manchen Fällen kann es auch wünschenswert sein, die Lösung der gebildeten Disazoverbindungen der Formel (1), gegebenenfalls nach Zusatz von Puffersubstanzen und gegebenenfalls nach eventuellem Konzentrieren, direkt als Flüssigpräparation der färberischen Verwendung zuzuführen.

Die vorliegende Erfindung betrifft weiterhin, wie bereits erwähnt, neue Diaminoverbindungen der vorgenannten allgemeinen Formel (4) sowie deren Herstellung und Verwendung als Tetrazokomponenten zur Synthese von Disazoverbindungen. Sie können in erfindungsgemäßer Weise, ausgehend von Diaminen der allgemeinen Formel (8)

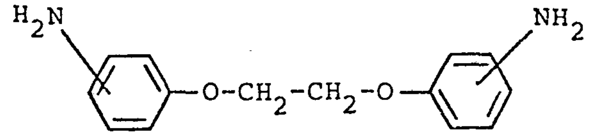

(8)

in welcher die Aminogruppe in beiden Phenylresten jeweils in ortho-Stellung oder jeweils in para-Stellung zum Äthylendioxy-Substituenten orientiert ist, analog bekannten Verfahrensweisen unter Benutzung folgender Reaktionsschritte synthetisiert werden :

Man acetyliert beispielsweise ein Diamin der Formel (8) zu der entsprechenden N,N'-Bisacetyl-Verbindung und setzt diese, beispielsweise mittels Chlorsulfonsäure und Thionylchlorid, wie z. B. in Houben-Weyl, Methoden der Organischen Chemie, Bd. IX, S. 578 (1955) beschrieben, vorzugsweise bei einer Temperatur zwischen 40 und 100 °C, insbesondere zwischen 60 und 70 °C, zu dem Sulfochlorid der nachstehend angegebenen Formel (9a) bzw. (9b) um

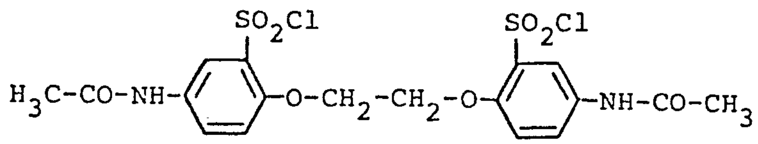

(9a)

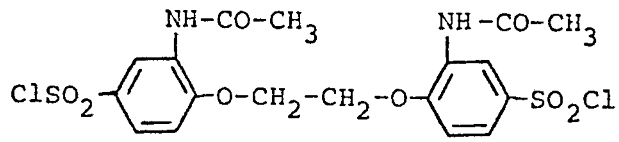

(9b)

Diese reduziert man, wie aus Houben-Weyl, Methoden der Organischen Chemie, Bd. IX, S. 306 (1955) bekannt, beispielsweise mit Alkalisulfit, insbesondere Natriumsulfit, in Gegenwart von Alkalicarbonat, wie Natriumcarbonat, in wäßriger Lösung, vorzugsweise bei einer Temperatur zwischen 0 °C und 60 °C, insbesondere 20 und 25 °C, und bei einem pH-Wert zwischen 7,0 und 10,0, bevorzugt zwischen 8,0 und 8,5, zu den entsprechenden Sulfinsäuren, welche mit Äthylenoxid in Gegenwart von wäßriger Schwefelsäure oder mit Äthylenchlorhydrin, beispielsweise analog dem in der belgischen Patentschrift Nr. 747 418 beschriebenen Verfahren, bei einer Temperatur im Bereich von 30 und 70 °C, vorzugsweise zwischen 50 und 60 °C, und bei einem pH-Wert zwischen 4,5 und 9,0, insbesondere zwischen 7,0 und 7,5, zu den β-Hydroxyäthylsulfonyl-Verbindungen der Formel (10a) bzw. (10b) oxäthyliert werden können

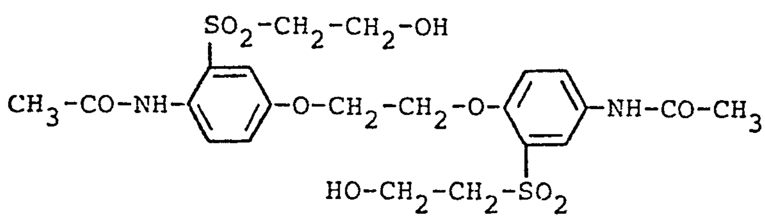

(10a)

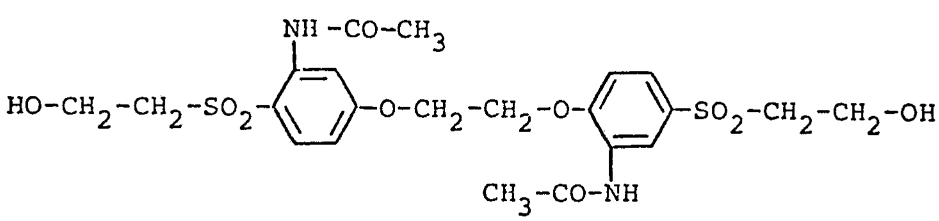

(10b)

Nach Entacetylierung mittels anorganischer Säuren, wie beispielsweise wäßriger Salzsäure oder wäßriger Schwefelsäure, werden aus (10a) bzw. (10b) Diamine der oben definierten Formel (4)

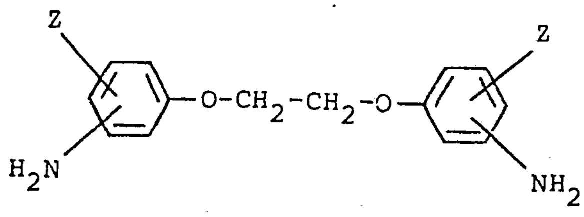

(4)

erhalten, worin Z für diesen Fall jeweils die β-Hydroxyäthylsulfonyl-Gruppe bedeutet.

Zur Darstellung der Diamine der allgemeinen Formel (4), in welcher Y als Rest den Gruppe Z gemäß obengenannter Definition ein Chloratom oder der Esterrest einer organischen bzw. anorganischen Säure, wie beispielsweise ein Sulfato-, Phosphato-, niederer Alkylsulfonyloxy- oder Arylsulfonyloxy-Rest, bedeutet, werden die Vorstufen (10a) und (10b) analog einer dem Fachmann bekannten Weise mit einem anorganischen oder organischen Säurehalogenid, wie beispielsweise Thionylchlorid, Phosphorhalogeniden, Alkylsulfonyl- oder Arylsulfonychloriden, Amido-, N-Alkylamido- oder N-Arylamidosulfonsäurechloriden oder mit Schwefelsäure oder Phosphorsäure, verestert und anschließend, oder im Falle der Verwendung von Schwefelsäure bzw. Phosphorsäure gegebenenfalls gleichzeitig, die Acetylaminogruppe zur Aminogruppe verseift.

Die Herstellung der Diamine der allgemeinen Formel (4), in denen Z die Gruppe $-SO_2-CH_2-CH_2-OSO_3H$ bedeutet, erfolgt bevorzugt in der Weise, daß die über die Verbindungen (10a) oder (10b) erhältlichen Diamine der Formel (4) mit Z als β-Hydroxyäthylsulfonyl-Gruppe analog bekannter Weise mit 95-100 %iger Schwefelsäure oder $SO_3$-haltiger Schwefelsäure bei einer Temperatur zwischen − 5 °C und + 50 °C, vorzugsweise 20 und 25 °C, verestert werden. Die so gebildeten Sulfato-Verbindungen der allgemeinen Formel (4) können aus ihren mit Eis verdünnten sauren Lösungen entweder bei einer Temperatur von maximal 20 °C, vorzugsweise bis + 10 °C, als innere Ammoniumsalze isoliert werden oder nach Neutralisation mit beispielsweise einem Alkalihydroxid, insbesondere Natrium- oder Kaliumhydroxid, in Gestalt ihrer Alkalimetallsalze, insbesondere Natrium- oder Kaliumsalze, durch Sprühtrocknen erhalten werden.

Die erfindungsgemäßen Diamine der allgemeinen Formel (4), in welcher Z die Vinylsulfonylgruppe bedeutet, können bevorzugt aus den letztgenannten Salzen durch Reaktion mit wäßrigen Alkalien, vorzugsweise wäßrigem Natriumhydroxid, analog bekannten Verfahrensbedingungen gewonnen werden. Diese Vinylsulfon-Verbindungen können für die Herstellung weiterer Diamine der Formel (4) dienen, beispielsweise solcher Diamine der Formel (4), in denen Y den Thiosulfato-, den Phenoxy- oder eine gegebenenfalls durch Sulfo oder Carboxy substituierte niedere Dialkylaminogruppe darstellt, indem man entweder im schwach sauren Milieu bei einem pH-Wert von vorzugsweise 5-7 Alkalithiosulfat, insbesondere Natrium- oder Kaliumthiosulfat, oder im schwach alkalischen oder neutralen Milieu bei einem pH-Wert im Bereich von 7 bis 10 ein Phenol oder ein entsprechendes gegebenenfalls substituiertes Dialkylamin an die Vinylsulfonyl-Gruppe addiert.

Die erfindungsgemäßen Disazoverbindungen der allgemeinen Formel (1) besitzen wertvolle Farbstoffeigenschaften, die infolge ihrer Reste Z und der gegebenenfalls vorhandenen Reste X faserreaktive Eigenschaften aufweisen. Die neuen Verbindungen werden bevorzugt zum Färben (im allgemeinen Sinne) von hydroxy- und/oder carbonamidgruppenhaltigen Materialien, beispielsweise in Form von Flächengebilden, wie Papier und Leder oder Folien, oder in der Masse, wie Polyamid und Polyurethan, insbesondere von solchen Materialien in Faserform, verwendet.

Die vorliegende Erfindung betrifft somit auch die Verwendung der Verbindungen der allgemeinen Formel (1) zum Färben (einschließlich Massefärbung und Druckfärbung) dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte oder Polyvinylalkohole. Cellulosefasermaterialien sind vorzugsweise Baumwolle, aber auch andere Pflanzenfasern, wie Leinen, Hanf, Jute und Ramiefasern, oder regenerierte Cellulosefasern, wie beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Mit den erfindungsgemäßen Azoverbindungen erhält man beispielsweise auf Cellulosefasern nach dem Ausziehverfahren unter Verwendung verschiedenster Alkalizusätze aus langer Flotte Färbungen mit sehr guter Farbausbeute und sehr guten Naßechtheitseigenschaften. Die Verbindungen der allgemeinen Formel (1) färben Cellulosefasern unter Verwendung der bekannten Klotzverfahren ebenfalls mit ausgezeichneten Farbausbeuten und sehr guten Naßechtheitseigenschaften, wobei diese Verbindungen mittels Alkalizusätzen durch Verweilen bei Raumtemperatur, durch Dämpfen oder mit Trockenhitze fixiert werden können.

Ebenfalls nach den üblichen Druckverfahren für Cellulosefasern, — einphasig — beispielsweise durch Bedrucken mit einer Natriumbicarbonat oder ein anderes säurebindendes Mittel enthaltenden Druckpaste und anschließendes Dämpfen bei 101-103 °C, — oder zweiphasig — beispielsweise durch Bedrucken mit neutraler oder schwach saurer Druckpaste und anschließender Fixierung entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des so behandelten Materials, — erhält man farbstarke Drucke mit gutem Stand der Konturen und einem klaren Weißfond und sehr guten Naßechtheitseigenschaften. Der Ausfall der Drucke ist von wechselnden Fixierbedingungen nur wenig abhängig. Sowohl in der Färberei als auch in der Druckerei sind die mit den erfindungsgemäßen Farbstoffen erhaltenen Fixiergrade hoch.

Neben dem üblichen Wasserdampf von 100-103 °C kann auch überhitzter Dampf und Druckdampf von Temperaturen bis zu 160 °C eingesetzt werden. Bei der Fixierung mittels Trockenhitze nach den üblichen Thermofixierverfahren verwendet man Heißluft von 120-200 °C.

Die säurebindenden und die Fixierung der erfindungsgemäßen Verbindungen auf den Cellulosefasern bewirkenden Mittel sind beispielsweise wasserlösliche basische Salze der Alkalimetalle und ebenfalls Erdalkalimetalle von anorganischen und organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat. Durch die Behandlung der erfindungsgemäßen Verbindungen mit den säurebindenden Mitteln, gegebenenfalls unter Wärmeeinwirkung, werden diese chemisch an die Cellulosefaser gebunden.

Die Färbungen auf Polyamidfasern werden üblicherweise aus saurem Milieu ausgeführt. So kann man beispielsweise dem Färbebad Essigsäure, Essigsäure und Ammoniumacetat oder Natriumacetat zufügen, um den gewünschten pH-Wert zu erhalten. Zwecks Erreichung einer brauchbaren Egalität der Färbungen empfiehlt sich ein Zusatz an üblichen Egalisiermitteln, beispielsweise auf Basis eines Umsetzungsproduktes von Cyanurchlorid mit der dreifach molaren Menge einer Aminobenzol- und/oder einer Aminonaphthalinsulfonsäure oder auf Basis eines Umsetzungsproduktes von einem Fettamin, wie beispielsweise Stearylamin, mit einem Alkylenoxid, wie beispielsweise Äthylenoxid. Die Färbungen können üblicherweise bei Temperaturen von 60-105 °C, vorzugsweise im Ausziehverfahren, insbesondere bei Siedetemperatur des Färbebades, oder auch in einem Druckfärbeapparat bei Temperaturen bis zu 120 °C ausgeführt werden.

Die mit den Verbindungen der allgemeinen Formel (1) erhältlichen Färbungen oder Drucke besitzen, insbesondere auf Cellulosefasermaterialien, sehr gute Echtheiten ; hiervon sind insbesondere die wichtigsten Fabrikations- und Gebrauchsechtheiten hervorzuheben, wie die Lichtechtheit, die Waschechtheit, beispielsweise bei 60 °C oder 95 °C, die saure und alkalische Walkechtheit, die Wasserechtheit, die Seewasserechtheit, die saure Uberfärbeechtheit, die alkalische und saure Schweißechtheit sowie die Plissier-, Bügel- und Reibechtheiten. Bei der Anwendung in Druckverfahren zeigt sich die sehr gute Auswaschbarkeit nicht fixierter Anteil der Verbindungen der Formel (1), so daß ein Anfärben des Weißfonds beim Spülen mit Wasser vermieden wird.

Besonders bevorzugt sind von den erfindungsgemäßen Verbindungen diejenigen der allgemeinen Formel (1a)

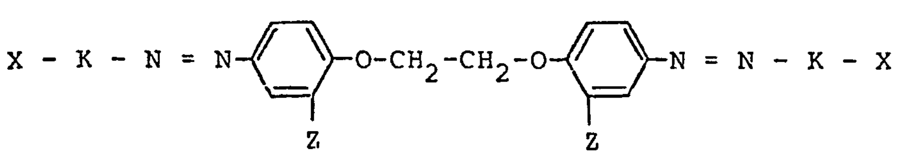

(1a)

in welcher K, Z und X die obengenannte, insbesondere bevorzugte Bedeutung besitzen. Sie zeichnen sich durch ein vorzügliches Aufzieh- und Aufbauvermögen beim Färben von natürlichen und regenerierten Cellulosefasern aus, wobei hohe Ausziehgrade und sehr gute Fixierwerte erhalten werden.

Von den erfindungsgemäßen Einzelverbindungen entsprechend der allgemeinen Formel (1) können insbesondere diejenigen hervorgehoben werden, die in den Beispielen 8, 9, 11, 13 und 18 beschrieben sind.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile beziehen sich zu Volumenteilen wie Kilogramm zu Liter.

Die in den nachstehenden Beispielen formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

## Beispiel 1

a) Zu einer Lösung von 328,4 Teilen Äthylenglykol-bis-(4-acetamino-phenyl)-äther in 1 100 Teilen Chlorsulfonsäure werden 250 Teile Thionylchlorid zugetropft. Man stellt die Temperatur des Reaktionsgemisches auf 65 °C und gibt es nach dreistündiger Reaktionszeit unter Rühren auf 6 000 Teile Eis, wobei als Reaktionsprodukt Äthylenglykol-bis-(4-acetamino-2-chlorsulfonyl-phenyl)-äther ausfällt. Nach Absaugen und Waschen mit Eiswasser wird das Produkt in eine Mischung von 500 Teilen Wasser, 572 Teilen 40 %igem wäßrigem Natriumbisulfit und 88 Teilen Natriumhydroxid bei 20 °C eingetragen, während gleichzeitig der pH des Gemisches mit 33 %igem wäßrigem Natriumhydroxid bei einem Wert von 8,0 bis 8,5 gehalten wird.

b) Die Lösung der gebildeten Bis-sulfinsäure, des Äthylenglykol-bis-(4-acetamino-2-sulfinophenyl)-äthers, wird unter Rühren auf + 10 °C abgekühlt, mit 360 Teilen Äthylenoxid versetzt und innerhalb von 2 Studen auf 50 °C anschließend während einer Stunde auf 60 °C erwärmt, wobei der pH des Reaktionsgemisches mit 20 %iger Schwefelsäure bei einem Wert von 7,0 bis 7,5 gehalten wird. Man kühlt auf 10 °C ab, gibt weitere 180 Teile Äthylenoxid zu und erhitzt das Reaktionsgemisch bei Konstanthalten des pH bei einem Wert von 7,0 bis 7,5 auf 60 °C. Nach Beendigung der Reaktion wird auf 20 °C abgekühlt und der ausgefallene Äthylenglykol-bis-(4-acetamino-2-β-hydroxyäthylsulfonylphenyl)-äther abfiltriert und mit Eiswasser gewaschen.

c) Der feuchte Filterkuchen wird in 1 500 Teile 5 %ige Schwefelsäure eingerührt und während 3 Stunden unter Rückfluß erhitzt. Die erhaltene klare Lösung wird bei 70-80 °C mit konz. wäßrigem Natriumhydroxid bis zum pH-Wert von 6,5 neutralisiert und unter Rühren auf 15-20 °C abgekühlt, wobei der Äthylenglykol-bis-(4-amino-2-β-hydroxyäthylsulfonyl-phenyl)-äther ausfällt. Das getrocknete Produkt schmilzt bei 194-196 °C.

Elementaranalyse :

| | | | |
|---|---|---|---|
| Berechnet | C 46,94 % | H 5,25 % | N 6,08 % |
| Gefunden | C 46,50 % | H 5,25 % | N 6,20 %. |

## Beispiel 2

a) 460,5 Teile Äthylenglykol-bis-(4-amino-2-β-hydroxyäthylsulfonyl-phenyl)-äther werden bei 20-25 °C in 1 850 Teile 100 %ige Schwefelsäure eingerührt. Die erhaltene Lösung bleibt 12 Stunden unter Ausschluß von Luftfeuchtigkeit stehen. Anschließend gibt man sie auf 15 000 Teile Eis und stellt den pH des Gemisches mit Calciumcarbonat auf einen Wert von 1,2, danach mit Natriumcarbonat auf einen Wert von 6,5. Die Mischung wird auf 60 °C erwärmt, von ausgefallenem Calciumsulfat durch Filtration abgetrennt und aus dem erhaltenen Filtrat der Äthylenglykol-bis-(4-amino-2-β-sulfatoäthylsulfonyl-phenyl)-äther als Dinatriumsalz durch Sprühtrocknen isoliert.

b) Rührt man die nach a) erhaltene Lösung in eine solche Menge Eis ein, daß die Temperatur den Wert von 10 °C nicht übersteigt, fallen als Produkt 548 Teile (= 88 % d. Th.) Äthylenglykol-bis-(4-ammonio-2-β-sulfatoäthylsulfonyl-phenyl)-äther als inneres Salz kristallin aus.

## Beispiel 3

Eine Lösung von 62,0 Teilen Äthylenglykol-bis-(4-amino-2-β-sulfatoäthyl-phenyl)-äther in Gestalt ihres Dinatriumsalzes in Wasser wird mit konz. wäßrigem Natriumhydroxid bis zu einem pH-Wert von 12,0 versetzt. Es fallen 41,0 Teile Äthylenglykol-bis-(4-amino-2-vinylsulfonyl-phenyl)-äther als kristalline Verbindung aus. Nach Filtration und Trocknen schmilzt das Produkt bei 187-189 °C.

## Beispiel 4

Eine Suspension von 424,5 Teilen Äthylenglykol-bis-(4-amino-2-vinyl-sulfonyl-phenyl)-äther in 4 000 Teilen Wasser wird mit 500 Teilen Natriumthiosulfat-Pentahydrat versetzt und unter Rühren auf 70-75 °C erhitzt. Der pH wird mit 50 %iger Essigsäure bis zur vollständigen Klärung der Suspension bei einem pH-Wert von 5,7 gehalten. Aus der erhaltenen Lösung wird der gebildete Äthylenglykol-bis-(4-amino-2-β-thiosulfatoäthylsulfonyl-phenyl)-äther mittels Kaliumchlorid als Kaliumsalz abgeschieden.

## Beispiel 5

328,4 Teile Äthylenglykol-bis-(2-acetamino-phenyl)-äther werden gemäß Beispiel 1 mit 1 100 Teilen Chlorsulfonsäure und 250 Teilen Thionylchlorid zum Äthylenglykol-bis-(2-acetamino-4-chlorsulfonyl-phenyl)-äther umgesetzt. Nach dessen Isolierung wird dieser nach dem in Beispiel 1 beschriebenen Verfahren mittels 572 Teilen 40 %igem wäßrigem Natriumbisulfit zum Äthylenglykol-bis-(2-acetamino-4-

sulfino-phenyl)-äther reduziert und analog dem Verfahren in Beispiel 1 die erhaltene Bis-sulfinsäure mit 540 Teilen Äthylenoxid in den Äthylenglykol-bis-(2-acetamino-4-hydroxyäthylsulfonyl-phenyl)-äther überführt. Das Rohprodukt wird, wie in Beispiel 1 ausgeführt, durch 1 500 Teile 5 %ige wäßrige Schwefelsäure unter Bildung von Äthylenglykol-bis-(2-amino-4-β-hydroxyäthyl-phenyl)-äther entacetyliert. Dieses Produkt schmilzt nach dem Trocknen bei 144-146 °C.

Elementaranalyse :

| | | | | |
|---|---|---|---|---|
| Berechnet | C 46,94 % | H 5,25 % | N 6,08 % | S 13,92 % |
| Gefunden | C 46,40 % | H 5,20 % | N 6,10 % | S 13,60 %. |

Beispiel 6

460,5 Teile Äthylenglykol-bis-(2-amino-4-β-hydroxy-äthyl-sulfonyl-phenyl)-äther werden bei 20-25 °C in 1 850 Teile 100 %ige Schwefelsäure eingerührt ; man läßt die erhaltene Lösung 12 Stunden unter Ausschluß von Luftfeuchtigkeit stehen und gibt sie unter Rühren auf 15 000 Teile Eis. Man stellt das Gemisch mit Calciumcarbonat auf einen pH-Wert von 1,2, anschließend mit Natriumcarbonat auf einen pH-Wert von 6,5 und erwärmt auf 60 °C. Das ausgefallene Calciumsulfat wird abfiltriert und der Äthylenglykol-bis-(2-amino-4-β-sulfatoäthylsulfonylphenyl)-äther aus dem erhaltenen Filtrat als Dinatriumsalz durch Sprühtrocknen isoliert.

Beispiel 7

Eine Lösung von 46,0 Teilen Äthylenglykol-bis-(4-amino-2-β-hydroxyäthylsulfonyl-phenyl)-äther in 75 Teilen 31 %iger wäßriger Salzsäure und 250 Teilen Wasser wird mit 150 Teilen Eis versetzt und durch Zugabe von 40 Teilen 5n-Natriumnitritlösung tetrazotiert. Zu der gebildeten Lösung der Tetrazoniumverbindung fügt man 44,8 Teile 1-Naphthol-4-sulfonsäure und stellt den pH des Reaktionsgemisches mit Natriumcarbonat zunächst auf einen Wert von 4,0 und nach einer Stunde Reaktionszeit auf den Wert von 6,5.

Die erhaltene Disazoverbindung wird mit Natriumchlorid ausgesalzen, abgesaugt und getrocknet. Das fein gemahlene Produkt wird in die 6-fache Gewichtsmenge 100 %ige Schwefelsäure unter Ausschluß von Luftfeuchtigkeit eingerührt, wobei die Temperatur des Reaktionsgemisches 30 bis 35 °C betragen soll. Nach 12-stüdigem Rühren wird die Lösung langsam in Eis eingerührt, wobei durch gleichmäßige Eiszugabe die Temperatur bei + 5 °C gehalten wird. Anschließend wird mittels Calciumcarbonat der pH-Wert des erhaltenen Gemisches auf 1,2 gestellt und anschließend mit Natriumcarbonat bis zum pH-Wert von 6,5 neutralisiert. Man erhitzt auf 65 °C, filtriert von Calciumsulfat ab und fällt die Disazoverbindung aus dem Filtrat durch Aussalzen mittels Natriumchlorid aus. Nach Absaugen, Trocknen und Vermahlen des Produkts erhält man ein dunkelrotes elektrolythaltiges, vorwiegend natriumchloridhaltiges, Pulver, welches das Alkalimetallsalz, vorwiegend Natriumsalz, der Verbindung der folgenden Formel

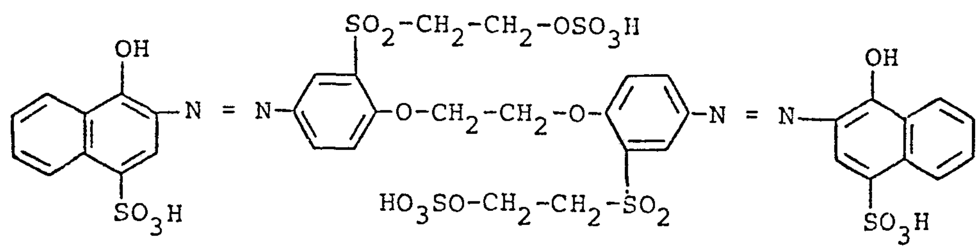

enthält. Sie zeigt sehr gute Farbstoffeigenschaften und färbt nach den für Reaktivfarbstoffe üblichen Färbe- und Druckmethoden Cellulosefasermaterialien, wie Baumwolle, in kräftigen, klaren scharlachroten Farbtönen mit hoher färberischer Ausbeute ; diese Färbungen und Drucke zeigen sehr gute Gebrauchs- und Fabrikationsechtheiten, wie insbesondere sehr gute Naßechtheiten.

Beispiel 8

46,0 Teile Äthylenglykol-bis-(4-amino-2-β-hydroxyäthylsulfonyl-phenyl)-äther werden in 320 Teile 100 %iger Schwefelsäure bei 25-30 °C eingerührt. Nach 8-stündigem Rühren werden 64 Teile 40,1 %iger Nitrosylschwefelsäure bei 20 bis 25 °C zugetropft und das erhaltene Reaktionsgemisch noch eine Stunde weitergerührt. Die Lösung der gebildeten Tetrazoniumverbindung wird anschließend unter kräftigem Rühren auf 1 200 Teile Eis gegeben und die hierbei erhaltene Suspension mit Natriumcarbonat auf einen pH-Wert von 1 gestellt, wobei die Temperatur bei maximal 15 °C gehalten wird. Danach werden 60,8 Teile 1-Naphthol-3,6-disulfonsäure zugegeben ; mittels Natriumcarbonat wird der pH-Wert des Reaktionsgemisches auf 6,0 erhöht. Man verdünnt die entstehende Suspension auf ca. 5 500 Teile und saugt die gebildete Disazoverbindung nach ca. 5 Studen Reaktionszeit ab. Nach Trocknen und Mahlen des

Filterkuchens wird ein rotes, Elektrolytsalz (vorwiegend Natriumsulfat) haltiges Pulver des Alkalimetallsalzes, vorwiegend Natriumsalzes, des Verbindung der nachstehenden Formel

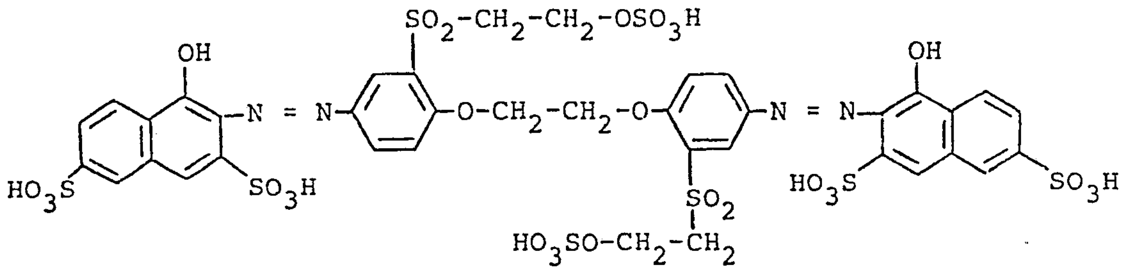

erhalten. Die erfindungsgemäße Disazoverbindung färbt Cellulosefasermaterialien, wie Baumwolle, aus wäßrigem Färbebad in Gegenwart von Natriumbicarbonat, Natriumcarbonat oder Natriumhydroxid in einem kräftigen klaren Scharlachton mit sehr guten Naßechtheitseigenschaften und sehr guter Lichtechtheit.

Gegenüber konstitutionell vergleichbaren Monoazoverbindungen auf der Grundlage von 1-Aminobenzol-β-sulfatoäthylsulfon-Derivaten als Diazokomponenten lassen sich mit der erfindungsgemäßen Disazoverbindung eine höhere färberische Ausbeute und bessere Naßechtheiten auf der Faser erzielen.

Beispiel 9

Führt man das in Beispiel 8 beschriebene Verfahren unter Verwendung von 43,8 Teilen N-Methyl-4-methyl-6-hydroxypyrid-2-on-3-sulfonsäure anstelle der 1-Naphthol-3,6-disulfonsäure durch, so erhält man ein gelb-braunes Pulver, welches vorwiegend das Natriumsalz der Disazoverbindung der Formel

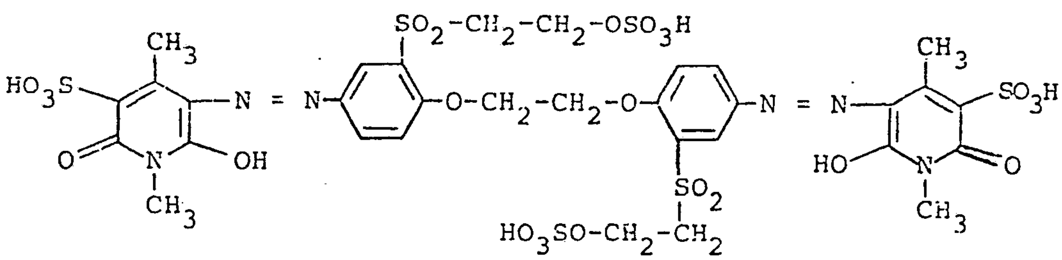

enthält. Diese erfindungsgemäße Disazoverbindung besitzt ebenfalls sehr gute Farbstoffeigenschaften. Aus wäßrigem Färbebad in Gegenwart von säurebindenden Mitteln liefert sie auf Cellulosefasermaterialien, wie auf Baumwolle, tiefe gelbe Färbungen mit sehr guten Naßechtheitseigenschaften und sehr guter Lichtechtheit.

Im Vergleich zu Monoazoverbindungen, die mit 1-Aminobenzol-β-sulfatoäthylsulfon-Derivaten als Diazokomponente erhalten werden, besitzt die erfindungsgemäße Verbindung wesentlich höhere färberische Ausbeuten, und zwar unabhängig davon, ob das zu färbende Material nach verschiedenen Verfahren, beispielsweise nach Klotz-Verweil-, Klotz-Dämpf- oder Klotz-Thermofixierverfahren, einphasig, d. h. in Gegenwart von Alkali, oder zweiphasig, d. h. durch Überklotzen mit Alkali, oder nach einem Ausziehverfahren gefärbt wird.

Beispiel 10

46,0 Teile Äthylenglykol-bis-(4-amino-2-β-hydroxyäthylsulfonyl-phenyl)-äther werden gemäß dem in Beispiel 8 angegebenen Verfahren tetrazotiert, und die erhaltene Lösung der Tetrazoverbindung wird auf 1 200 Teile Eis gegeben. Diese Suspension wird nach Einstellen eines pH-Wertes von 1 mit Calciumcarbonat mit 84,6 Teilen 8-N-Benzoylamino-1-naphthol-3,5-disulfonsäure versetzt, der pH des Reaktionsgemisches mit Natriumcarbonat auf einen Wert von etwa 6 gestellt, die Reaktionslösung nach beendigter Kupplung bei 65 °C durch Filtration von ausgefallenem Calsiumsulfat abgetrennt und die erfindungsgemäße Disazoverbindung aus dem Filtrat entweder durch Versprühen der Lösung bei 220 bis 240 °C als elektrolythaltiges Pulver isoliert oder durch Zugabe von Natriumchlorid ausgesalzen.

Man erhält das Natriumsalz der Disazoverbindung der Formel

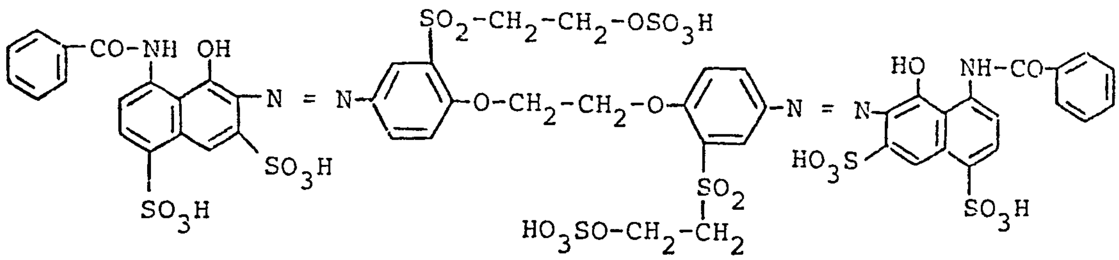

Diese erfindungsgemäße Disazoverbindung zeigt sehr gute Farbstoffeigenschaften und färbt nach den für Reaktivfarbstoffe üblichen Färbe- und Druckmethoden und Fixierverfahren bspw. Cellulosefasermaterialien, wie Baumwolle, aus wäßrigem Natriumcarbonat-haltigem Färbebad in brillanten blaustichigen Rottönen. Die Färbungen und Drucke zeigen bei sehr guten färberischen Ausbeuten sehr gute Gebrauchs- und Fabrikationsechtheiten, wie insbesondere eine sehr gute Licht- und Naßechtheit.

Beispiel 11

Eine neutrale Lösung von 62 Teilen Äthylenglykol-bis-(4-amino-2-β-sulfatoäthylsulfonyl-phenyl)-äther wird mit 40 Teilen einer wäßrigen 5n-Natriumnitritlösung versetzt und langsam zu einer Mischung von 150 Teilen Eis und 70 Teilen 31 %iger Salzsäure gegeben. Nach ca. 30-minütigem Rühren wird überschüssige salpetrige Säure durch Zugabe von wenig Amidosulfonsäure zersetzt, 56,8 Teile 1-(4-Sulfophenyl)-pyrazol-5-on-3-carbonsäure zugegeben und der pH der Kupplungsmischung mit Natriumcarbonat auf einen Wert von 6,0 eingestellt. Nach zweistündiger Reaktion wird die erfindungsgemäße Disazoverbindung durch Zugabe von Natriumchlorid ausgesalzen, abfiltriert, getrocknet und vermahlen.

Es wird ein gelbbraunes, Elektrolytsalze (vorwiegend Natriumchlorid) haltiges Pulver des Alkalimetallsalzes, vorwiegend Natriumsalzes, der Verbindung der Formel

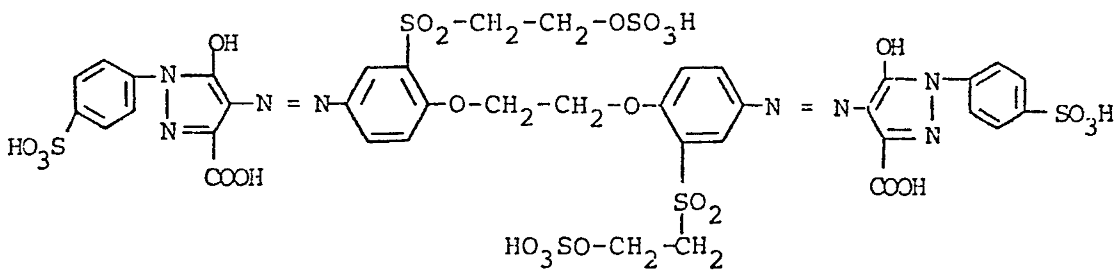

erhalten. Sie besitzt sehr gute Farbstoffeigenschaften und liefert beim Bedrucken von bspw. Baumwolle oder Regeneratcellulose nach den für Reaktivfarbstoffe üblichen Verfahren tiefgelbe Drucke mit hoher Farbausbeute und sehr guten Naßechtheitseigenschaften.

Wolle wird aus schwach essigsaurem, mit Ammoniumacetat gepuffertem Färbebad neutral gelb augefärbt, wobei die erfindungsgemäße Disazoverbindung sehr gut aufzieht und in Gegenwart von Fettamin-oxäthylaten tiefe Färbungen mit ausgezeichneter Egalität und sehr guten Naßechtheitseigenschaften ergibt.

Beispiel 12

Eine neutrale Lösung von 62 Teilen Äthylenglykol-bis-(2-amino-4-β-sulfatoäthylsulfonyl-phenyl)-äther in 250 Teilen Wasser wird mit 150 Teilen Eis, 70 Teilen 31 %iger wäßriger Salzsäure und anschließend mit 40 Teilen 5n-Natriumnitritlösung unter Rühren versetzt. Man rührt das Reaktionsgemisch noch 30 Minuten weiter und zerstört, wie üblich, überschüssige salpetrige Säure. In die Lösung der Tetrazoniumverbindung werden 64,6 Teile 1-(2,5-Dichlor-4-sulfophenyl)-3-methyl-pyrazol-5-on gegeben, und der pH-Wert des Kupplungsgemisches wird bis zum Ende der Kupplungsreaktion bei 6,5 gehalten. Die erfindungsgemäße Disazoverbindung wird sodann mit Natriumchlorid ausgesalzen, filtriert und getrocknet.

Man erhält ein Elektrolytsalze (vorwiegend Natriumchlorid) haltiges Pulver des Alkalimetallsalzes, vorwiegend Natriumsalzes, der Verbindung der Formel

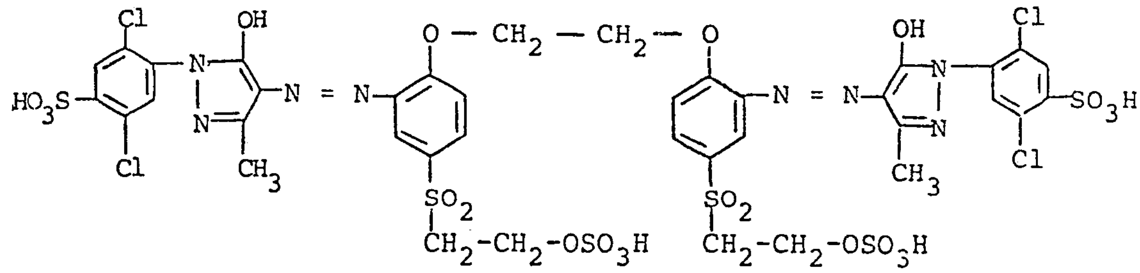

Sie weist sehr gute Farbstoffeigenschaften auf und färbt in Gegenwart von Alkali nach den für Reaktivfarbstoffe üblichen Färbe- und Druckmethoden und Fixierverfahren Cellulosefasermaterialien, wie Baumwolle oder Zellwolle, in brillanten grünstichig gelben Farbtönen mit sehr guten Naßechtheiten und guten bis sehr guten Lichtechtheiten.

Beispiel 13

Zu einer Lösung von 42,4 Teilen Äthylenglykol-bis-(4-amino-2-vinylsulfonyl-phenyl)-äther in einem Gemisch von 250 Teilen Wasser und 70 Teilen 31 %iger wäßriger Salzsäure werden 150 Teile Eis zugegeben und anschließend 40 Teile einer wäßrigen 5 n-Natriumnitritlösung zugetropft. Man rührt das Reaktionsgemisch noch ca. 30 Minuten weiter und zerstört danach wie üblich überschüssige salpetrige Säure. Die Lösung der Tetrazoniumverbindung wird mit einer wäßrigen Lösung des Natriumsalzes von 113,6 Teilen 8-N-[4-Chlor-6-(3-sulfo-phenylamino)-1,3,5-triazin-2-yl]-amino-1-naphthol-3,6-disulfonsäure versetzt. Der pH-Wert der erhaltenen Mischung mit Natriumcarbonat auf 6,0 gestellt und die gebildete blaustichig rote erfindungsgemäße Diazoverbindung nach beendeter Kupplungsreaktion mit Kaliumchlorid ausgefällt, abgesaugt, getrocknet und gemahlen.

Es wird ein dunkelrotes Pulver des Alkalimetallsalzes, vorwiegend Kaliumsalzes, der Verbindung der Formel

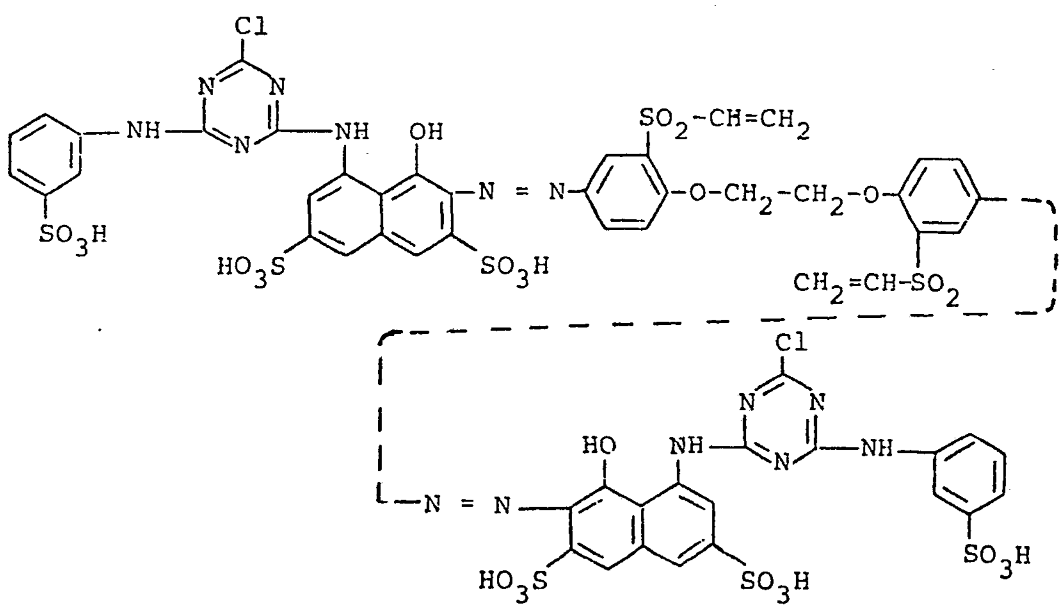

erhalten. Sie besitzt sehr gute Farbstoffeigenschaften und liefert nach den für faserreaktive Farbstoffe üblichen Applikations- und Fixierverfahren auf Cellulosefasermaterialien in sehr guter Ausbeute Färbungen und Drucke mit klaren blaustichig roten Farbtönen von sehr guten Gebrauchs- und Fabrikationsechtheiten, wie insbesondere sehr gute Naßechtheiten.

Beispiel 14

Verfährt man in erfindungsgemäßer Verfahrensweise analog dem Beispiel 13 und ersetzt dort die 8-N-[4-Chlor-6-(3-sulfo-phenylamino)-1,3,5-triazin-2-yl]-amino-1-naphthol-3,6-disulfonsäure durch 107 Teile 8-N-[4-Fluor-6-(3-sulfo-phenylamino)-1,3,5-triazin-2-yl]-amino-1-naphthol-3,6-disulfonsäure, so erhält man das Kaliumsalz der Disazoverbindung der Formel

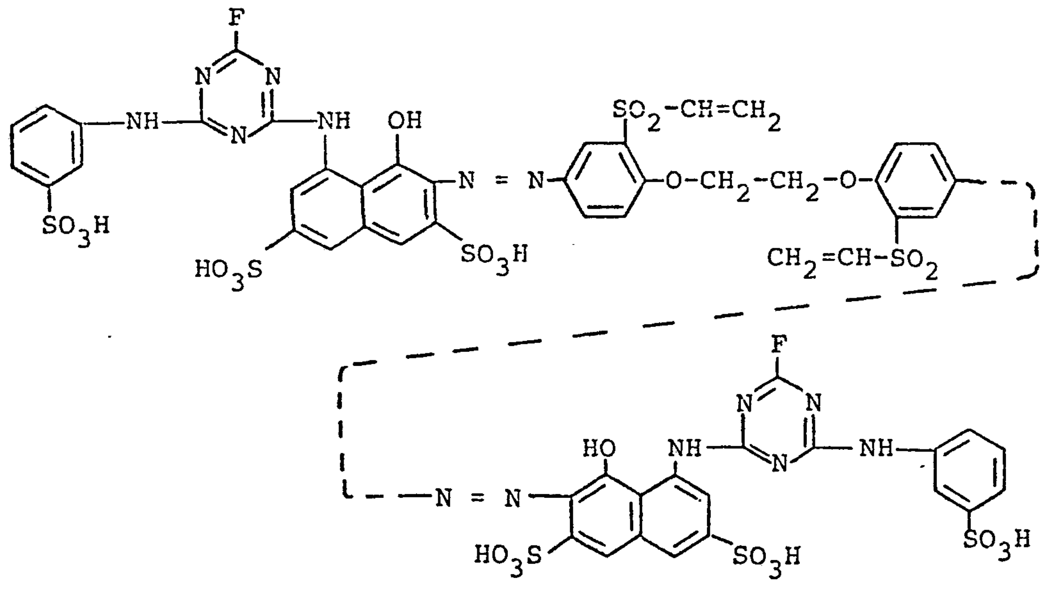

Diese erfindungsgemäße Verbindung besitzt ebenfalls sehr gute Farbstoffeigenschaften und liefert auf Cellulosefasermaterialien Färbungen und Drucke mit klaren blaustichig roten Farbtönen in hervorragender färberischer Ausbeute. Sie weisen sehr gute Gebrauchs- und Fabrikationsechtheiten, wie insbesondere gute Naßechtheiten, auf.

Beispiel 15

Zu einer Lösung des Natriumsalzes von 65,2 Teilen Äthylenglykol-bis-(4-amino-2-β-thiosulfatoäthylsulfonyl-phenyl)-äther in 300 Teilen Wasser werden 40 Teile einer wäßrigen 5n-Natriumnitritlösung gegeben; anschließend wird durch Einrühren in eine Mischung von 200 g Eis und 70 Teilen 30 %iger wäßriger Salzsäure tetrazotiert. Man rührt noch 30 Minuten nach und zersetzt sodann überschüssige salpetrige Säure. 60,8 Teile 1-Naphthol-3,8-disulfonsäure werden zugesetzt, der pH-Wert des Reaktionsgemisches mit Natriumcarbonat auf 6,0 gestellt und nach beendeter Kupplungsreaktion die erfindungsgemäße Disazoverbindung mit Natriumchlorid ausgefällt, abgesaugt, getrocknet und gemahlen.

Es wird (elektrolythaltig) das Alkalimetallsalz, vorwiegend Natriumsalz, der Verbindung der Formel

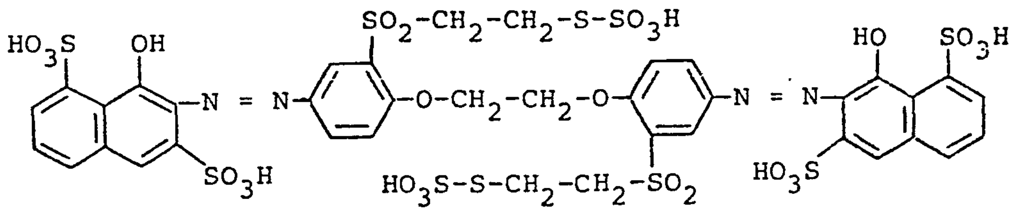

erhalten. Die erfindungsgemäße Disazoverbindung besitzt sehr gute Farbstoffeigenschaften und liefert nach den für faserreaktive Farbstoffe üblichen Applikations- und Fixierverfahren bspw. auf Cellulosematerialien Färbungen und Drucke hoher Farbstärke mit klaren neutralen Rottönen von sehr guten Gebrauchs- und Fabrikationsechtheiten, wie insbesondere sehr guten Naßechtheiten. Sie zeichnet sich darüberhinaus durch ein sehr gutes Zieh- und Aufbauvermögen aus.

Beispiel 16

Zu einer Lösung von 49,7 Teilen Äthylenglykol-bis-(4-amino-2-β-chloräthylsulfonyl-phenyl)-äther in 300 Teilen Wasser und 70 Teilen 31 %iger wäßriger Salzsäure werden 150 Teile Eis gegeben und 40 Teile einer wäßrigen 5n-Natriumnitritlösung zugetropft. Man rührt die Reaktionslösung noch 30 Minuten weiter und zersetzt überschüssige salpetrige Säure mit wenig Amidosulfonsäure. Danach gibt man 60,8 Teile 2-Naphthol-3,6-disulfonsäure hinzu, stellt den pH-Wert des Kupplungsgemisches auf etwa 6 ein und fällt die erfindungsgemäße Disazoverbindung mittels Natriumchlorid aus, saugt sie ab und trocknet und mahlt sie.

Man erhält ein rotes Elektrolytsalze (vorwiegend Natriumchlorid) haltiges Pulver, des Alkalimetallsalzes, vorwiegend Natriumsalzes, der Verbindung der Formel

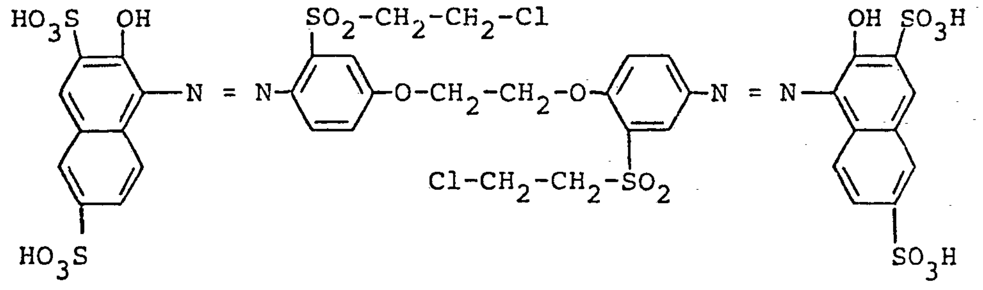

Diese erfindungsgemäße Disazoverbindung besitzt sehr gute Farbstoffeigenschaften und liefert nach den für faserreaktive Farbstoffe üblichen Applikations- und Fixierverfahren auf Cellulosefasermaterialien Färbungen und Drucke mit brillanten Scharlachnuancen von hoher Farbausbeute und sehr guten Gebrauchs- und Fabrikationsechtheiten, wie insbesondere sehr guten Naßechtheiten.

Beispiel 17

Eine neutrale Lösung von 62 Teilen Äthylenglykol-bis-(4-amino-2-β-sulfatoätulfonyl-phenyl)-äther in 250 Teilen Wasser wird mit 150 Teilen Eis und 70 Teilen 31 %iger wäßriger Salzsäure versetzt und durch Zutropfen von 40 Teilen einer wäßrigen 5n-Natriumnitritlösung tetrazotiert. Man rührt die Reaktionslösung noch 30 Minuten, zersetzt überschüssige salpetrige Säure und gibt sodann eine wäßrige Lösung des Natriumsalzes von 102,7 Teilen 1-[2,5-Disulfo-4-(2,4-difluor-5-chlor-pyrimid-6-yl-amino)-phenyl]-3-methyl-pyrazol-5-on in 300 ml Wasser hinzu. Der pH-Wert des Gemisches wird mit Natriumcarbonat auf 6,0 gestellt, und nach 2 Studen wird die gebildete Disazoverbindung durch Natriumchlorid ausgesalzen, abfiltriert, getrocknet und gemahlen.

Man erhält ein dunkles, gelbbraunes, Elektrolytsalze (vorwiegend Natriumchlorid) haltiges Pulver des Alkalimetallsalzes, vorwiegend Natriumsalzes, der Verbindung der Formel

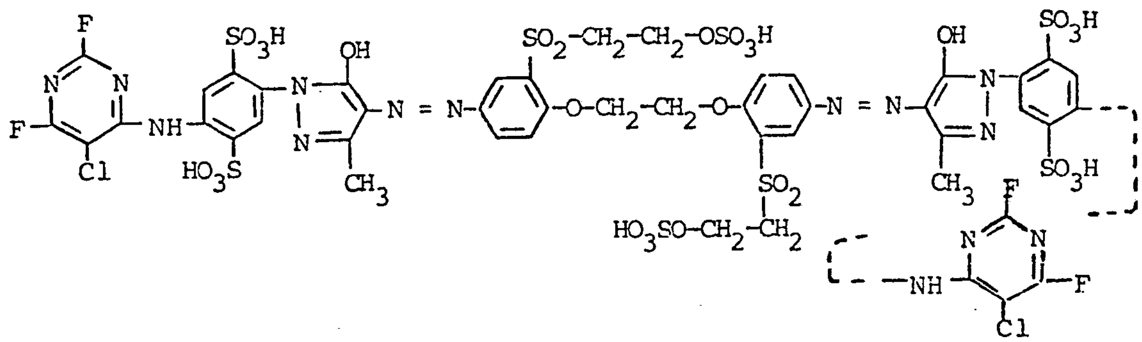

Diese erfindungsgemäße Disazoverbindung besitzt sehr gute Farbstoffeigenschaften und färbt bspw. Wolle aus essigsaurem Bad in klaren rotstichig gelben Farbtönen mit vorzüglichen Gebrauchs- und Fabrikationsechtheiten, wie insbesondere vorzüglichen Naß- und sehr guten Lichtechtheiten. Mit den für faserreaktive Farbstoffe üblichen Applikations- und Fixierverfahren auf Cellulosefasermaterialien in Gegenwart von Alkali werden kräftig goldgelbe Färbungen mit hoher färberischer Ausbeute erhalten. Auch diese Färbungen besitzen sehr gute Gebrauchs- und Fabrikationsechtheiten, wie sehr gute Licht- und Naßechtheiten.

Beispiele 18 bis 65

In den nachfolgenden Tabellenbeispielen sind weitere erfindungsgemäße Disazoverbindungen mit Hilfe ihrer Tetrazokomponenten (Diaminoverbindungen) entsprechend der allgemeinen Formel (4a) oder (4b)

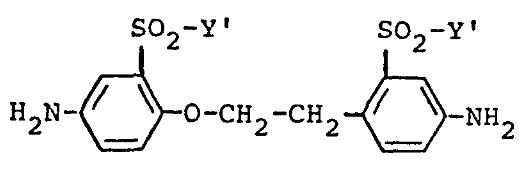

(4a)

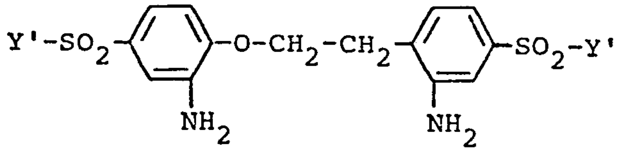

(4b)

und ihrer Kupplungskomponenten beschrieben (die in den Tabellenbeispielen angegebenen allgemeinen Formeln ($K_1$) bis ($K_{13}$) sind im Anschluß an die Tabelle aufgeführt). Diese erfindungsgemäßen Disazoverbindungen lassen sich in erfindungsgemäßer Weise, beispielsweise analog einem der obigen Ausführungsbeispiele, aus diesen Komponenten herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

(Siehe Tabelle Seite 19 ff.)

| Bsp. | Diaminoverbindung der Formel ... | mit Y' gleich ..... | Kupplungskomponente H-K-R* der allgemeinen Formel ... | mit R* gleich ..... | Farbton auf Cellulose |
|---|---|---|---|---|---|
| 18 | (4a) | ß-Sulfatoäthyl | $K_1$ | Acetyl | blaustichig rot |
| 19 | (4a) | dito | $K_1$ | Benzoyl | dito |
| 20 | (4a) | dito | $K_2$ | Acetyl | dito |
| 21 | (4a) | dito | $K_1$ | Phenylaminocarbonyl | dito |
| 22 | (4a) | ß-(Methylsulfonyl-oxy)-äthyl | $K_1$ | 4-Chlorbenzoyl | dito |
| 23 | (4a) | ß-(Amidosulfonyl-oxy)-äthyl | $K_2$ | (4-Chlor-phenyl)-aminocarbonyl | dito |
| 24 | (4b) | ß-Sulfatoäthyl | $K_2$ | Acetyl | dito |
| 25 | (4b) | dito | $K_1$ | Benzoyl | dito |
| 26 | (4b) | Vinyl | $K_1$ | Benzoyl | dito |
| 27 | (4b) | dito | $K_1$ | 2-Chlor-4-(4'-ß-sulfato-äthylsulfonyl-phenyl)-amino-1,3,5-triazin-6-yl | dito |
| 28 | (4b) | ß-Sulfatoäthyl | $K_3$ | Acetylamino | scharlach |
| 29 | (4b) | dito | $K_3$ | N-(ß-Chlorpropionyl)-N-methyl-amino | dito |
| 30 | (4b) | dito | $K_3$ | Sulfo | dito |
| 31 | (4b) | dito | $K_3$ | 2-Chlor-4-(2',5'-disulfo-phenyl)-amino-1,3,5-triazin-6-yl | dito |
| 32 | (4b) | dito | $K_1$ | 2-Chlor-4-methoxy-1,3,5-triazin-6-yl | blaustichig rot |

| Bsp. | Diaminoverbindung der Formel ... | mit Y' gleich .... | Kupplungskomponente H-K-R* der allgemeinen Formel ... | mit R* gleich ..... | Farbton auf Cellulose |
|---|---|---|---|---|---|
| 33 | (4a) | ß-Sulfatoäthyl | $K_3$ | N-Methyl-N-(ß-sulfatoäthylsulfonyl)-amino | scharlach |
| 34 | (4a) | dito | $K_1$ | 2-Chlor-4-(N-methyl-N-phenyl)-amino-1,3,5-triazin-6-yl | blaustichig rot |
| 35 | (4a) | dito | $K_1$ | 2,3-Dichlor-chinoxalin-6-carbonyl | dito |
| 36 | (4a) | dito | $K_1$ | 2,4-Dichlor-pyrimidin-6-yl | dito |
| 37 | (4a) | dito | $K_4$ | 2-Methylsulfonyl-4-methyl-5-chlor-pyrimidin-6-yl-amino | rot |
| 38 | (4a) | dito | $K_1$ | 2-Chlor-4-bis-/ß-(ß'-chloräthylsulfonyl)-äthyl_7-amino-1,3,5-triazin-6-yl | blaustichig rot |
| 39 | (4a) | | $K_4$ | N-Methyl-N-/2-chlor-4-(2'-methyl-4'-sulfo-phenyl)-amino-1,3,5-triazin-6-yl_7-amino | rot |
| 40 | (4a) | dito | $K_5$ | 4-Sulfo-phenyl | gelb |
| 41 | (4b) | dito | $K_5$ | dito | gelb |
| 42 | (4b) | dito | $K_5$ | 6-Sulfo-2-naphthyl | gelb |
| 43 | (4b) | dito | $K_6$ | Phenyl | goldgelb |
| 44 | (4b) | dito | $K_6$ | Methyl | gelb |
| 45 | (4b) | dito | $K_7$ | Sulfo | gelb |
| 46 | (4a) | dito | $K_5$ | 2,5-Dichlor-4-sulfo-phenyl | gelb |

| Bsp. | Diaminoverbindung der Formel ... | mit Y' gleich .... | Kupplungskomponente H-K-R* der allgemeinen Formel ... | mit R* gleich ..... | Farbton auf Cellulose |
|---|---|---|---|---|---|
| 47 | (4a) | ß-Sulfatoäthyl | $K_8$ | 4-Sulfo-phenyl | grünstichig gelb |
| 48 | (4a) | dito | $K_9$ | 4-/¯2'-Chlor-4'-(2"-sulfophenyl)-amino-1',3',5'-triazin-6'-yl_7-amino-2-sulfo-phenyl | goldgelb |
| 49 | (4a) | dito | $K_9$ | 3,6-Disulfo-2-naphthyl | gelb |
| 50 | (4a) | dito | $K_5$ | 2-Chlor-6-methyl-4-sulfo-phenyl | gelb |
| 51 | (4a) | dito | $K_5$ | 3-Sulfo-phenyl | gelb |
| 52 | (4a) | dito | $K_9$ | 5-(2',4'-Difluor-5'-chlor-pyrimidin-6'-yl)-amino-2-sulfo-phenyl | gelb |
| 53 | (4a) | dito | $K_5$ | 2,5-Disulfo-phenyl | gelb |
| 54 | (4a) | dito | $K_9$ | 4-/¯2'-Chlor-4'-(ß-sulfatoäthyl)-amino-1',3',5'-6'-yl_7-amino-2,5-disulfo-phenyl | goldgelb |
| 55 | (4a) | dito | $K_{10}$ | ß-Sulfato-äthylamino | goldgelb |
| 56 | (4a) | dito | $K_{11}$ | 2-Methoxy-5-methyl-4-sulfo-phenyl | gelb |
| 57 | (4a) | dito | $K_{11}$ | 4,8-Disulfo-2-naphthyl | gelb |
| 58 | (4a) | dito | $K_{11}$ | 2-Chlor-6-methyl-4-sulfo-phenyl | gelb |
| 59 | (4a) | dito | $K_{11}$ | 2-Methoxy-5-sulfo-phenyl | gelb |

| Bsp. | Diaminoverbindung der Formel ... | mit Y' gleich ..... | Kupplungskomponente H-K-R* der allgemeinen Formel ... | mit R* gleich ..... | Farbton auf Cellulo se |
|---|---|---|---|---|---|
| 60 | (4a) | ß-Sulfatoäthyl | $K_{11}$ | 4-/¯2'-Chlor-4'-(3"-sulfo-phenyl)-amino-1',3',5'-triazin-6'-yl_7-amino-2,5-disulfo-phenyl | gelb |
| 61 | (4a) | dito | $K_{11}$ | 4-/¯2'-Fluor-4'-(3"-sulfo-phenyl)-amino-1',3',5'-triazin-6'-yl_7-amino-3-sulfo-phenyl | gelb |
| 62 | (4a) | dito | $K_{12}$ | 5-Sulfo | orange |
| 63 | (4a) | dito | $K_{13}$ | 6-Sulfo | scharla ch |
| 64 | (4a) | dito | $K_{13}$ | 3,6-Disulfo | scharla ch |
| 65 | (4a) | dito | $K_{12}$ | 4,8-Disulfo | orange |

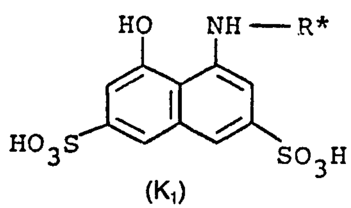
($K_1$)

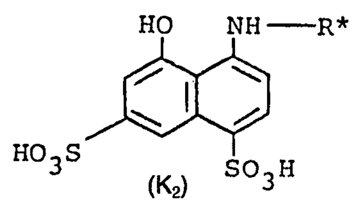
($K_2$)

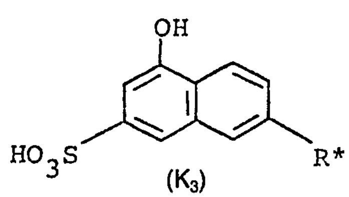
($K_3$)

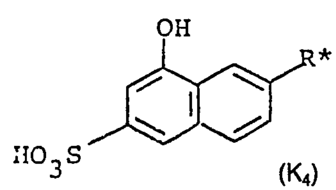
($K_4$)

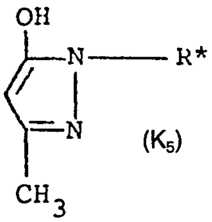

(K₅)

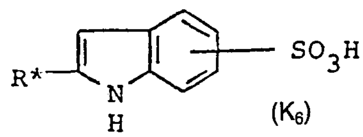

(K₆)

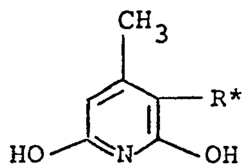

(K₇)

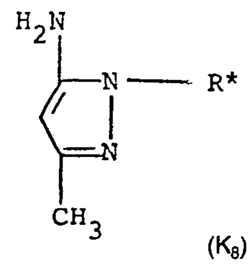

(K₈)

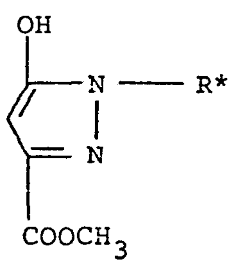

(K₉)

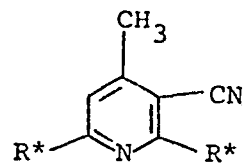

(K₁₀)

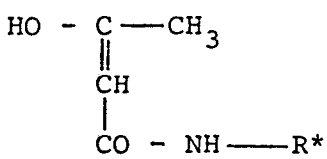

(K₁₁)

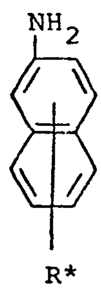

(K₁₂)

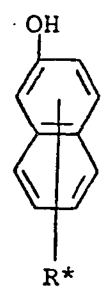

K₁₃)

Beispiel 66

Man stellt gemäß den Angaben des Beispieles 13 die dort beschriebene Lösung des Tetrazoniumsalzes des Äthylenglykol-bis-(4-amino-2-vinylsulfonyl-phenyl)-äthers her, stellt diese sodann mit Natriumcarbonat auf einen pH-Wert zwischen 4,0 und 4,5 und läßt sie unter Rühren zu einer Lösung von 63,8 Teilen des Dinatriumsalzes der 1-Amino-8-naphthol-3,6-disulfonsäure in 200 Teilen Wasser bei gleichzeitiger Einstellung und Konstanthaltung eines pH-Wertes zwischen 8,2 und 8,5 mittels Natriumcarbonat zulaufen. Der Kupplungsansatz wird noch einige Zeit bei diesem pH-Wert bis zur Beendigung der Kupplungsreaktion weitergerührt, sodann mit verdünnter wäßriger Salzsäure auf einen pH-Wert von 6,5 eingestellt, auf 10 °C abgekühlt, mit 40,6 Teilen Cyanurchlorid versetzt und bei einem pH-Wert von 5,5 bis zur Beendigung der Acylierungsreaktion weitergerührt.

Anschließend wird die Syntheselösung einer Klärfiltration unterworfen und das Filtrat mit 38,1 Teilen Anilin-3-sulfonsäure versetzt. Der pH-Wert wird weiterhin bei 5,5 mittels Natriumcarbonat gehalten und die Temperatur des Reaktionsansatzes auf 50 °C erhöht. Die zweite Acylierungsreaktion wird bei 50 °C und einem pH-Wert zwischen 5,5 und 6,0 noch 2 Stunden weitergeführt ; sie ist danach beendet.

Die so hergestellte erfindungsgemäße Disazoverbindung, die der des Beispieles 13 entspricht, wird in

üblicher Weise, beispielsweise wie im Beispiel 13 beschrieben, isoliert. Sie besitzt die gleich guten anwendungstechnischen Eigenschaften und Echtheiten wie die nach Beispiel 13 hergestellte erfindungsgemäße Disazoverbindung.

**Ansprüche**

1. Wasserlösliche Disazoverbindungen der allgemeinen Formel (1)

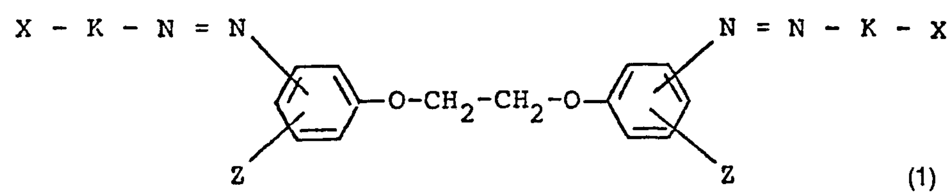

(1)

in welcher die zweifach auftretenden Formelglieder K, X und Z jeweils eine einander identische Bedeutung besitzen und die Gruppen Z an die beiden Benzolkerne jeweils in ortho- oder jeweils in para-Stellung zum Äthylendioxy-Substituenten sowie die Azogruppen und die Gruppen Z in den Benzolkernen jeweils zueinander meta-ständig gebunden sind und

K der Rest einer carboxy-, sulfato- und/oder sulfogruppenhaltigen Kupplungskomponente ist,

X ein Wasserstoffatom oder eine faserreaktive Gruppe bedeutet und

Z eine Gruppe der Formel $-SO_2-CH=CH_2$ oder $-SO_2-CH_2-CH_2-Y$ ist, in welcher

Y einen anorganischen oder organischen, im wäßrigen Medium alkalisch oder sauer eliminierbaren Rest bedeutet oder für die Hydroxygruppe steht, wobei

X auch die Bedeutung von Z haben kann.

2. Disazoverbindungen nach Anspruch 1 der allgemeinen Formel (1), dadurch gekennzeichnet, daß K als Rest einer Kupplungskomponente hier den Rest einer Kupplungskomponente der Aminonaphthalin, Naphthol-, Anilin-, Acetoacetylanilid-, Acetoacetyl-naphthylamid-, der 5-Aminopyrazol-, der Pyrazol-5-on-, der 6-Hydroxy-pyrid-2-on- oder der 2,6-Diamino-pyridin-Reihe mit mindestens einer Sulfo- und/oder Sulfatogruppe bedeutet.

3. Verbindungen nach Anspruch 1 der allgemeinen Formel (1), dadurch gekennzeichnet, daß K als Rest einer Kupplungskomponente hier der 1-Amino-naphthylen- oder 2-Aminonaphthylen-Rest ist, die mindestens eine Sulfogruppe enthalten und, wie angegeben, durch eine Gruppe X substituiert sein können und deren Aminogruppen jeweils durch niederes Alkyl, durch Aryl substituiertes niederes Alkyl und/oder Arylreste mono- oder disubstituiert sein können, oder der 1- oder 2-Hydroxy-naphthylen-Rest ist, die mindestens eine Sulfogruppe enthalten und, wie angegeben, durch eine Gruppe X substituiert sein können und die durch eine Aminogruppe oder durch eine durch niederes Alkyl, durch Aryl substituiertes niederes Alkyl und/oder Aryl substituierte Aminogruppe oder durch eine Acylaminogruppe oder eine Acyl-($C_1$-$C_2$)-alkyl-amino-Gruppe substituiert sein können, wobei die Acylreste jeweils insbesondere den Rest einer gegebenenfalls halogensubstituierten Alkancarbonsäure mit 1-5 C-Atomen im Alkylrest, einer gegebenenfalls halogensubstituierten Arylalkancarbonsäure mit 1 bis 3 C-Atomen im Alkanteil oder einer gegebenenfalls halogensubstituierten Arylcarbonsäure bedeuten oder den Rest einer gegebenenfalls halogensubstituierten N-Aryl-carbaminsäure darstellen.

4. Disazoverbindungen nach Anspruch 1 der allgemeinen Formel (1), dadurch gekennzeichnet, daß K als Rest einer Kupplungskomponente hier ein Acetoacetyl-anilid- oder Acetoacetyl-N-naphthylamid-Rest ist, in welchen der Phenylrest und der Naphthylrest eine, zwei oder drei Sulfogruppen enthält und, wie angegeben, gegebenenfalls durch die Gruppe X substituiert ist und noch zusätzlich durch 1 oder 2 Substituenten aus der Gruppe Fluor, Chlor, Brom, niederes Alkyl, niederes Alkoxy, Carboxy, niederes Carbalkoxy, Carbamoyl, durch niederes Alkyl und/oder Phenyl mono- oder disubstituiertes Carbamoyl, Amino und niederes N-Alkylamino substituiert sein kann.

5. Disazoverbindungen nach Anspruch 1 der allgemeinen Formel (1), dadurch gekennzeichnet, daß K als Rest einer Kupplungskomponente hier der 5-Aminopyrazol-4-yl- oder 5-Pyrazolon-4-yl-Rest ist, die in 3-Stellung durch Methyl, Carboxy, Carbamoyl, niederes Carbalkoxy oder Phenyl substituiert sind und in 1-Stellung einen Phenylrest oder Naphthylrest gebunden enthalten, wobei der Phenylrest durch 1 oder 2 Sulfogruppen und, wie angegeben, gegebenenfalls durch eine Gruppe X substituiert ist und durch 1 oder 2 Substituenten aus der Gruppe niederes Alkyl, niederes Alkoxy, Chlor, Brom, Nitro, Acetylamino, Amino, niederes N-Alkylamino und Carboxy substituiert sein kann und der Naphthylrest durch 1, 2 oder 3 Sulfogruppen und gegebenenfalls durch eine faserreaktive Gruppe substituiert ist und durch einen Substituenten aus der Gruppe niederes Alkyl, niederes Alkoxy, Nitro, Acetylamino, Amino, niederes N-Alkylamino und Carboxy substituiert sein kann.

6. Disazoverbindungen nach Anspruch 1 der allgemeinen Formel (1), dadurch gekennzeichnet, daß K als Rest einer Kupplungskomponente hier ein Rest der allgemeinen Formel (2a) oder (2b)

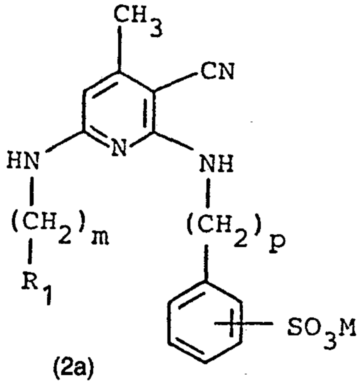
(2a)

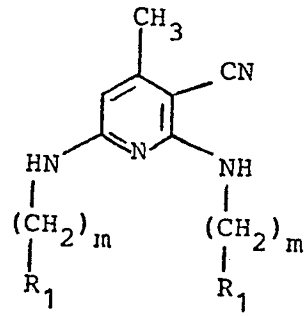
(2b)

ist, worin m jeweils eine ganze Zahl von 2 bis 4, p eine ganze Zahl von Null bis 4 und $R_1$ eine Sulfogruppe oder eine Sulfatogruppe bedeuten, wobei jedes $R_1$ und m in Formel (2b) jeweils die gleiche Bedeutung hat, wobei hier der an K gebundene Rest X gleich Wasserstoff ist.

7. Disazoverbindungen nach Anspruch 1 der allgemeinen Formel (1), dadurch gekennzeichnet, daß die Formelreste —K—X jeweils den gleichen Rest der Formel (3a) oder der Formel (3b)

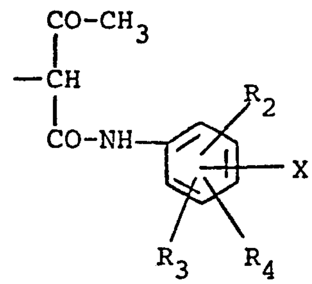
(3a)

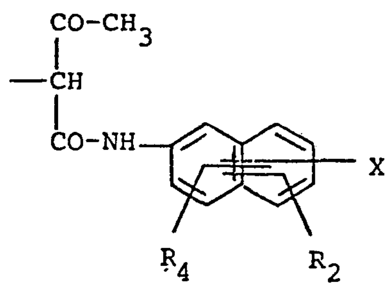
(3b)

bedeuten, in welchen $R_2$ ein Wasserstoffatom, eine niedere Alkylgruppe, eine niedere Alkoxygruppe, ein Chloratom, ein Bromatom oder eine Sulfogruppe ist, $R_3$ ein Wasserstoffatom, eine niedere Alkylgruppe, eine niedere Alkoxygruppe, ein Chloratom oder Bromatom bedeutet, $R_4$ ein Wasserstoffatom, eine niedere Alkylgruppe, eine niedere Alkoxygruppe, oder eine Sulfogruppe ist und X die in Anspruch 1 genannte Bedeutung besitzt.

8. Disazoverbindungen nach Anspruch 1 der allgemeinen Formel (1), dadurch gekennzeichnet, daß die Formelreste —K—X jeweils den gleichen Rest der Formel (3c) oder der Formel (3d)

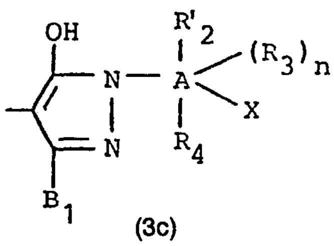
(3c)

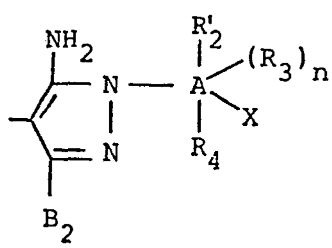
(3d)

ist, in welchen A der Benzolkern oder ein Naphthalinkern ist, $R'_2$ für ein Wasserstoffatom, eine niedere Alkylgruppe, eine niedere Alkoxygruppe, eine Chloratom, ein Bromatom, eine niedere Alkanoylaminogruppe oder eine Sulfogruppe steht, $R_3$ ein Wasserstoffatom, eine niedere Alkylgruppe, eine niedere Alkoxygruppe, ein Chloratom oder ein Bromatom bedeutet, $R_4$ ein Wasserstoffatom, eine niedere Alkylgruppe, eine niedere Alkoxygruppe oder eine Sulfogruppe ist, n für die Zahl 1 oder 2 steht, $B_1$ die Methylgruppe, eine Carboxygruppe, eine Carbomethoxy- oder eine Carbäthoxygruppe ist, $B_2$ die Methylgruppe, eine Carbomethoxy- oder Carbäthoxygruppe, eine Carbonamidgruppe oder ein gegebenenfalls durch einen oder zwei Substituenten aus der Gruppe niederes Alkyl, niederes Alkoxy, Chlor, Brom und Sulfo substituierter Phenylrest ist und X die in Anspruch 1 genannte Bedeutung besitzt.

9. Disazoverbindungen nach Anspruch 1 der allgemeinen Formel (1), dadurch gekennzeichnet, daß die Formelreste —K—X jeweils den gleichen Rest der Formel (3e) oder der Formel (3f)

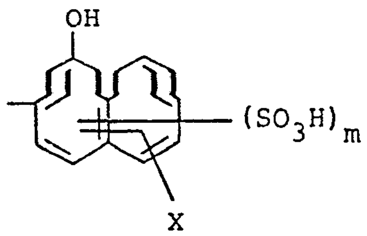

(3e)

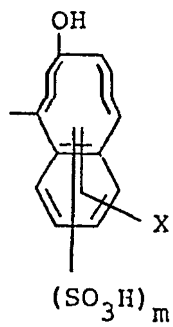

(3f)

ist, in welchen m für die Zahl 1 oder 2 steht und X die in Anspruch 1 genannte Bedeutung besitzt.

10. Disazoverbindungen nach Anspruch 1 der allgemeinen Formel (1), dadurch gekennzeichnet, daß die Formelreste —K—X jeweils den gleichen Rest der Formel (3g) oder der Formel (3h)

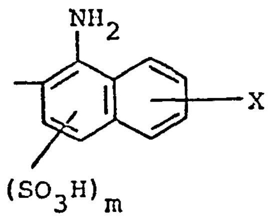

(3g)

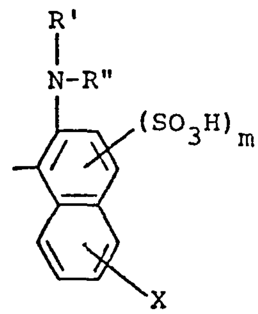

(3h)

ist, in welchen m für die Zahl 1 oder 2 steht, R′ ein Wasserstoffatom oder eine niedere Alkylgruppe ist, R″ ein Wasserstoffatom, eine niedere Alkylgruppe oder ein gegebenenfalls durch 1 oder 2 Substituenten aus der Gruppe niederes Alkyl, niederes Alkoxy, Chlor, Brom und Sulfo substituierter Phenylrest ist und X die in Anspruch 1 genannte Bedeutung besitzt.

11. Disazoverbindungen nach Anspruch 1 der allgemeinen Formel (1), dadurch gekennzeichnet, daß die beiden Formelreste —K—X jeder einen Rest der allgemeinen Formel (3i)

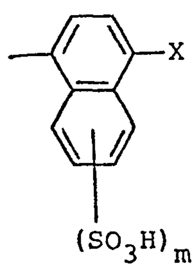

(3i)

bedeuten, in welcher m für die Zahl 1 oder 2 steht und X eine über die Gruppe —NR— gebundene faserreaktive Gruppe ist, wobei R ein Wasserstoffatom oder eine niedere Alkylgruppe bedeutet.

12. Disazoverbindungen nach einem der Ansprüche 1 bis 10, dadurch gekennzeichnet, daß Z oder X oder beide eine Gruppe der allgemeinen Formel $—SO_2—CH_2—CH_2—Y$ bedeuten, in welcher Y eine Alkanoyloxygruppe von 2 bis 5 C-Atomen, eine niedere Alkansulfonyloxygruppe, ein Chloratom, ein Bromatom, eine Thiosulfatogruppe, eine Phosphatogruppe oder die Amidosulfonyloxygruppe ist.

13. Disazoverbindungen nach Anspruch 1 der allgemeinen Formel (1), dadurch gekennzeichnet, daß Z oder X oder beide für die Vinylsulfonylgruppe oder bevorzugt für eine β-Sulfatoäthylsulfonyl-Gruppe stehen.

14. Disazoverbindungen nach einem der Ansprüche 1 bis 13, dadurch gekennzeichnet, daß X hier jeweils für eine faserreaktive Gruppe steht, die über eine Aminogruppe der Formel —NR— an K gebunden ist, wobei R ein Wasserstoffatom oder eine niedere Alkylgruppe bedeutet.

15. Disazoverbindungen nach Anspruch 1 der allgemeinen Formel

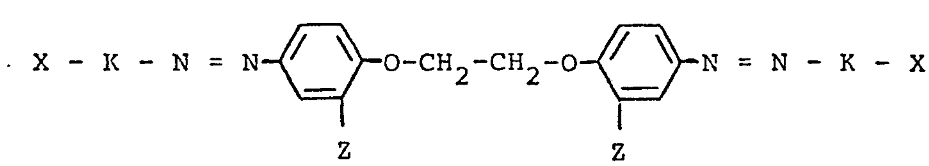

in welcher K, Z und X die in Anspruch 1 genannten Bedeutungen haben oder K, Z und X die in einem der Ansprüche 2 bis 14 bevorzugte Bedeutung besitzen.

16. Disazoverbindung nach Anspruch 1 der allgemeinen Formel

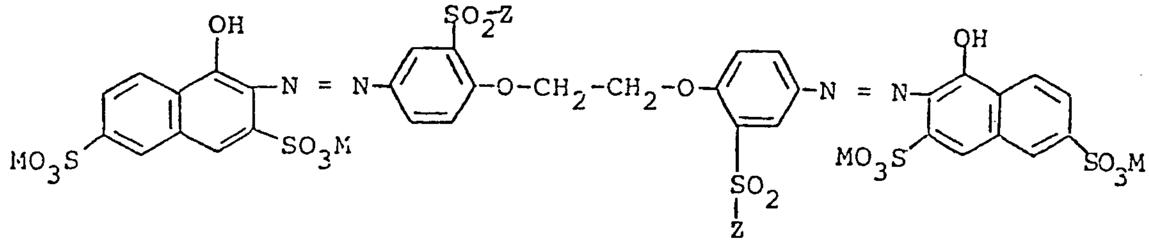

in welcher M und Z die in Anspruch 1 genannten Bedeutungen haben oder Z die in Anspruch 13 genannte Bedeutung besitzt.

17. Disazoverbindung nach Anspruch 1 der allgemeinen Formel

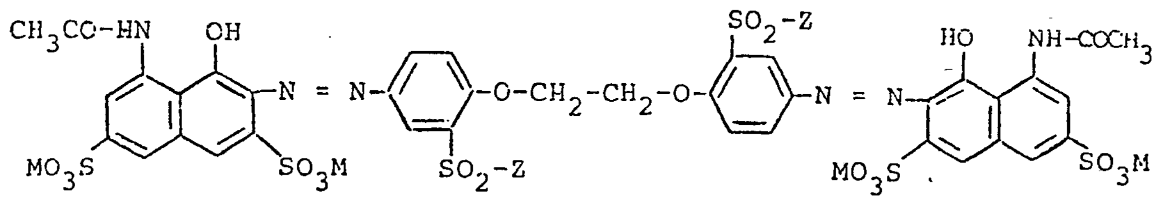

in welcher M und Z die in Anspruch 1 genannten Bedeutungen haben oder Z die in Anspruch 13 genannte Bedeutung besitzt.

18. Disazoverbindung nach Anspruch 1 der allgemeinen Formel

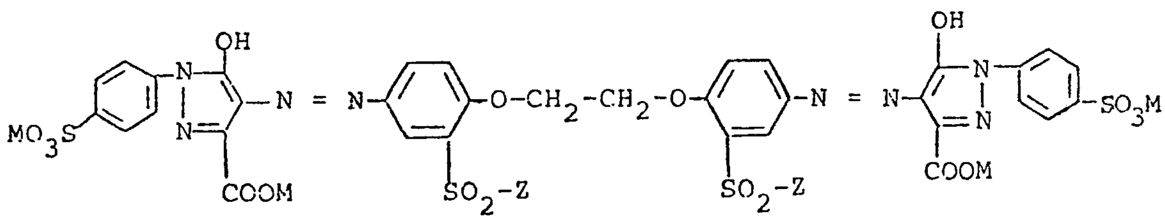

19. Disazoverbindung nach Anspruch 1 der allgemeinen Formel

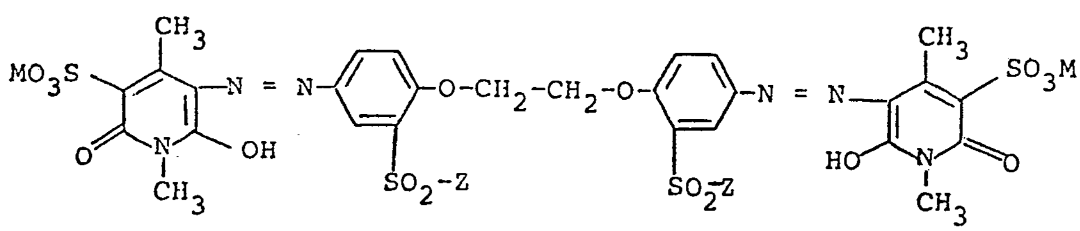

in welcher M und Z die in Anspruch 1 genannten Bedeutungen haben oder Z die in Anspruch 13 genannte Bedeutung besitzt.

20. Disazoverbindung nach Anspruch 1 der allgemeinen Formel

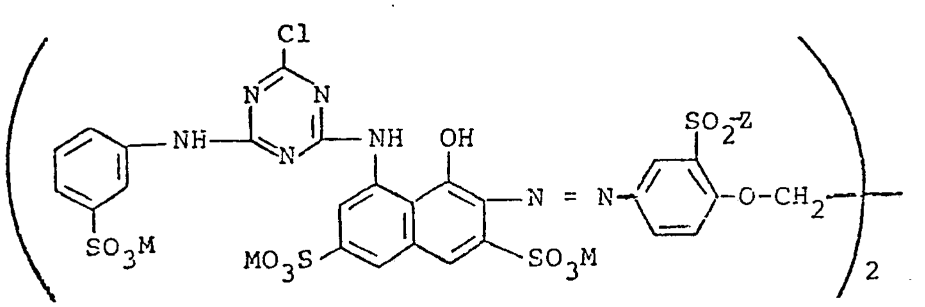

in welcher M und Z in Anspruch 1 genannten Bedeutungen haben oder Z die in Anspruch 13 genannte Bedeutung besitzt.

21. Verfahren zur Herstellung der Disazoverbindungen der allgemeinen Formel (1) von Anspruch 1, dadurch gekennzeichnet, daß man ein Tetrazoniumsalz eines Diamins der allgemeinen Formel (4)

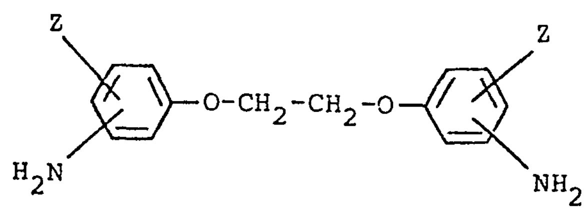
(4)

in welcher Z die in Anspruch 1 genannte jeweils gleiche Bedeutung besitzt, wobei die Gruppen Z an die beiden Benzolkerne jeweils in ortho- oder jeweils in para-Stellung zum Äthylendioxy-Substituenten und die Aminogruppen und die Gruppen Z in den Benzolkernen jeweils zueinander meta-ständig gebunden sind, mit der äquivalenten Menge einer Kupplungskomponente der allgemeinen Formel (5)

$$H—K—X \qquad (5)$$

in welcher K und X die in Anspruch 1 genannten Bedeutungen haben, kuppelt, oder daß man zur Herstellung der Disazoverbindungen der allgemeinen Formel (1), in welchen X eine über die Aminogruppe der Formel —NR— gebundenen faserreaktiven Rest bedeutet, in welcher R ein Wasserstoffatom oder eine niedere Alkylgruppe ist, ein Tetrazoniumsalz einer Diaminoverbindung der obengenannten und definierten allgemeinen Formel (4) mit der äquivalenten Menge einer Kupplungskomponente der allgemeinen Formel (6)

$$H - K - \underset{\underset{\displaystyle R}{|}}{NH} \qquad (6)$$

in welcher K und R die oben angegebenen Bedeutungen besitzen, kuppelt und anschließend diese Disazoverbindung mit jeweils einer Aminogruppe der Formel —NHR mit R der obengenannten Bedeutung in den Resten der Kupplungskomponenten K mit der äquivalenten Menge eines die faserreaktive Gruppe X enthaltenden Acylierungsmittels der allgemeinen Formel (7)

$$Hal—X \qquad (7)$$

in welcher X die in Anspruch 1 genannte Bedeutung besitzt und Hal ein Halogenatom ist, umsetzt, und daß man gegebenenfalls im Falle, daß Z und/oder X jeweils die β-Hydroxyäthylsulfonyl-Gruppe ist, die Disazoverbindungen der Formel (1) mit dieser Gruppe Z und/oder X mit einem Sulfatierungsmittel in die Disazoverbindungen der Formel (1) mit Z und/oder X jeweils gleich einer β-Sulfatoäthylsulfonyl-Gruppe überführt.

22. Verwendung der Verbindungen der allgemeinen Formel (1) von Anspruch 1 zum Färben und Bedrucken von hydroxygruppenhaltigem und/oder carbonamidgruppenhaltigem Material, insbesondere Fasermaterial.

23. Diaminoverbindungen der allgemeinen Formel (4)

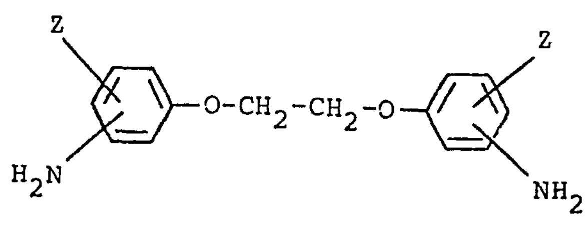
(4)

in welcher Z die in Anspruch 1 genannte, jeweils gleiche Bedeutung besitzt, wobei die Gruppen Z an die beiden Benzolkerne jeweils in ortho- oder jeweils in para-Stellung zum Äthylendioxy-Substituenten und die Aminogruppen die Gruppen Z in den Benzolkernen jeweils zueinander meta-ständig gebunden sind.

24. Diaminoverbindungen nach Anspruch 23 der allgemeinen Formel (4), dadurch gekennzeichnet, daß die beiden Aminogruppen hier in para-Stellung zum Äthylendioxy-Substituenten an die Benzolkerne gebunden sind.

25. Diaminoverbindungen nach Anspruch 23 oder 24, dadurch gekennzeichnet, daß die beiden Z hier für die β-Sulfatoäthylsulfonyl-Gruppe oder für die Vinylsulfonylgruppe stehen.

26. Verfahren zur Herstellung der Diaminoverbindungen der allgemeinen Formel (4) von Anspruch 23, dadurch gekennzeichnet, daß man ein Diamin der allgemeinen Formel

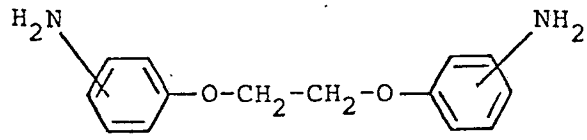

worin die Aminogruppen in beiden Benzolkernen jeweils in ortho-Stellung oder jeweils in para-Stellung zum Äthylendioxy-Substituenten orientiert sind, acetyliert, diese Verbindung sodann zur Verbindung der Formel

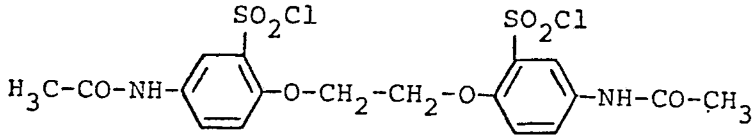

oder der Formel

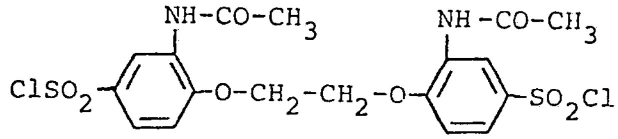

chlorsulfoniert, sodann unter Bildung der Sulfinsäure reduziert, mittels Äthylenoxid oder Äthylenchlorhydrin oxäthyliert und, entweder nach vorausgehender oder bei gleichzeitiger oder nachfolgender Entacetylierung, verestert und anschließend gegebenenfalls die Esterverbindung mit einem Alkali in die Vinylverbindung der Formel (4) mit Z als Vinylsulfonyl-Gruppe überführt und diese gegebenenfalls mit einem Phenol, einem niederen Dialkylamin oder einem Alkalithiosulfat zu einer Diaminoverbindung der Formel (4) mit Z gleich einer β-Phenoxyäthylsulfonyl-, einer niederen β-Dialkylaminoäthylsulfonyl- oder einer β-Thiosulfatoäthylsulfonyl-Gruppe umsetzt.

27. Verwendung der Diaminoverbindungen von Anspruch 23 als Tetrazokomponenten zur Herstellung von Disazoverbindungen.

## Claims

1. Water-soluble disazo compounds of the general formula (1)

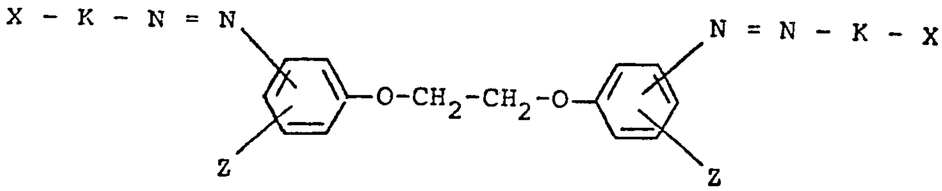

(1)

in which the formulae moieties K, X und Z, occurring twice, in each case have a meaning identical to one another, and the groups Z are bonded to the two benzene nuclei in each case in the ortho- or in each case in the para-position relative to the ethylenedioxy substituent, and the azo groups and the groups Z in the benzene nuclei are in each case bonded in the meta-position relative to one another, and

K is the radical of a coupling component containing a carboxy, sulfato and/or sulfo group,

X denotes a hydrogen atom or a fiber-reactive group and

Z is a group of the formula $-SO_2-CH=CH_2$ or $-SO_2-CH_2-CH_2-Y$ in which

Y denotes an inorganic or organic radical which can be eliminated in an aqueous medium under alkaline or acidic conditions, or represents the hydroxy group, and

X can also have the meaning of Z.

2. Disazo compounds according to claim 1, of the general formula (1) characterized by that K as the radical of a coupling component here denotes the radical of a coupling component of the aminonaphthalene, naphthol, aniline, acetoacetylanilide, acetoacetylnaphthylamide, of the 5-aminopyrazole, of the pyrazol-5-one, of the 6-hydroxypyrid-2-one or of the 2,6-diaminopyridine series with at least one sulfo and/or sulfato group.

3. Compounds according to claim 1, of the general formula (1), characterized by that K as a radical of a coupling component is here the 1-aminonaphthylene or 2-aminonaphthylene radical which contain at least one sulfo group and can be substituted, as indicated, by a group X, and the amino groups of which

can in each case be monosubstituted or disubstituted by lower alkyl, by aryl-substituted lower alkyl and/or aryl radicals, or is here the 1- or 2-hydroxynaphthylene radical which contain at least one sulfo group and which can be substituted, as indicated, by a group X, and which can be substituted by an amino group or by an amino group substituted by lower alkyl, by aryl-substituted lower alkyl and/or aryl, or by an acylamino group or an acyl-($C_1$-$C_2$)-alkylamino group, the acyl radicals in each case denoting, in particular, the radical of an optionally halogen-substituted alkane carboxylic acid having 1-5 C-atoms in the alkyl radical, of an optionally halogen-substituted arylalkane carboxylic acid having 1 to 3 C-atoms in the alkane part, or of an optionally halogen-substituted arylcarboxylic acid, or representing the radical of an optionally halogen-substituted N-arylcarbamic acid.

4. Disazo compounds according to claim 1, of the general formula (1), characterized by that K as a radical of a coupling component is here an acetoacetylanilide or acetoacetyl-N-naphthyl-amide radical in which the phenyl radical and the naphthyl radical contains one, two or three sulfo groups and is optionally substituted, as indicated, by the group X and can be additionally substituted by 1 or 2 substituents from the group comprising fluorine, chlorine, bromine, lower alkyl, lower alkoxy, carboxy, lower carbalkoxy, carbamoyl, carbamoyl which is monosubstituted or disubstituted by lower alkyl and/or phenyl, amino and lower N-alkylamino.

5. Disazo compounds according to claim 1, of the general formula (1), characterized by that K as a radical of a coupling component is here the 5-aminopyrazol-4-yl or 5-pyrazolon-4-yl radical which are substituted in the 3-position by methyl, carboxy, carbamoyl, lower carbalkoxy or phenyl and substituted in the 1-position by phenyl or naphthyl, the phenyl radical being substituted by 1 or 2 sulfo groups and, as indicated, optionally substituted by a group X and optionally substituted by 1 or 2 substituents from the group comprising lower alkyl, lower alkoxy, chlorine, bromine, nitro, acetylamino, amino, lower N-alkylamino and carboxy, and the naphthyl radical being substituted by 1, 2 or 3 sulfo groups and optionally substituted by a fiber-reactive group and optionally substituted by a substituent from the group comprising lower alkyl, lower alkoxy, nitro, acetylamino, amino, lower N-alkylamino and carboxy.

6. Disazo compounds according to claim 1, of the general formula (1), characterized by that K as a radical of a coupling component is here a group of the general formula (2a) or (2b)

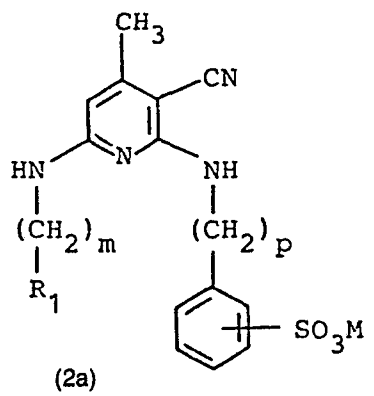
(2a)

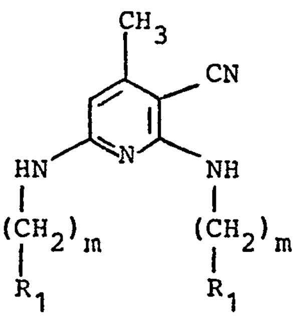
(2b)

in which m in each case denotes an integer from 2 to 4, p denotes an integer from zero to 4 and $R_1$ denotes a sulfogroup or a sulfato group, each $R_1$ and m in the formula (2b) having in each case the same meaning, and the radical X bonded to K is here equal to hydrogen.

7. Disazo compounds according to claim 1, of the general formula (1), characterized by that the formula radicals —K—X in each case denote the same group of the formula (3a) or of the formula (3b)

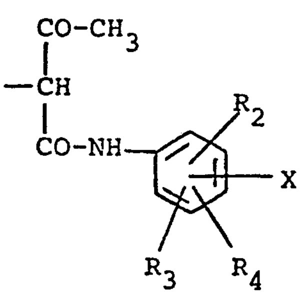
(3a)

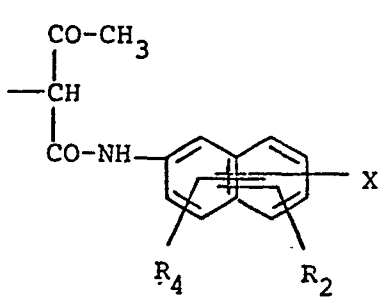
(3b)

in which $R_2$ is a hydrogen atom, a lower alkyl group, a lower alkoxy group, a chlorine atom, a bromine atom or a sulfo group, $R_3$ denotes a hydrogen atom, a lower alkyl group, a lower alkoxy group, a chlorine atom or bromine atom, $R_4$ is a hydrogen atom, a lower alkyl group, a lower alkoxy group or a sulfo group and X has the meaning mentioned in claim 1.

8. Disazo compounds according to claim 1, of the general formula (1), characterized by that the formula radical —K—X in each case is the same group of the formula (3c) or of the formula (3d)

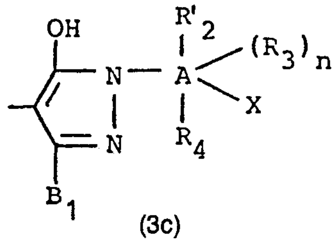
(3c)

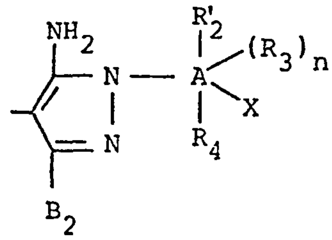
(3d)

in which A is the benzene nucleus or a naphthalene nucleus, $R'_2$ represents a hydrogen atom, a lower alkyl group, a lower alkoxy group, a chlorine atom, a bromine atom, a lower alkanoylamino group or a sulfo group, $R_3$ denotes a hydrogen atom, a lower alkyl group, a lower alkoxy group, a chlorine atom or a bromine atom, $R_4$ is a hydrogen atom, a lower alkyl group, a lower alkoxy group or a sulfo group, n represents the number 1 or 2, $B_1$ is the methyl group, a carboxy group or a carbomethoxy or a carbethoxy group, $B_2$ is the methyl group, a carbomethoxy or carbethoxy group, a carboxamide group or a phenyl radical optionally substituted by one or two substituents from the group comprising lower alkyl, lower alkoxy, chlorine, bromine and sulfo, and X has the meaning mentioned in claim 1.

9. Disazo compounds according to claim 1, of the formula (1), characterized by that the formula radical —K—X in each case is the same group of the formula (3e) or of the formula (3f)

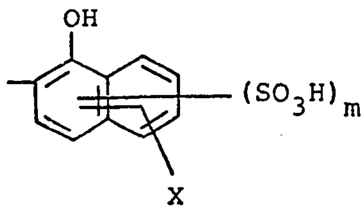
(3e)

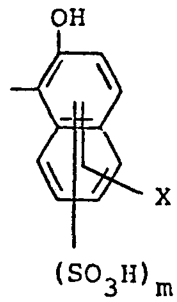
(3f)

in which m represents the number 1 or 2 and X has the meaning mentioned in claim 1.

10. Disazo compounds according to claim 1, of the general formula (1), characterized by that the formula radical —K—X is in each case the same group of the formula (3g) or of the formula (3h)

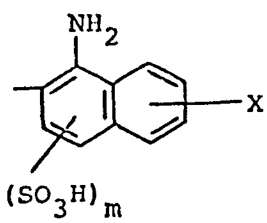
(3g)

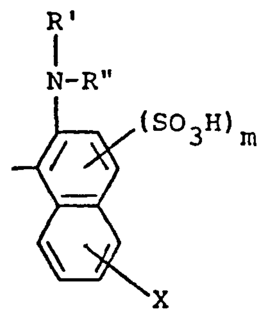
(3h)

in which m represents the number 1 or 2, R' is a hydrogen atom or a lower alkyl group, R" is a hydrogen atom, a lower alkyl group or a phenyl radical which is optionally substituted by 1 or 2 substituents of the group comprising lower alkyl, lower alkoxy, chlorine, bromine and sulfo, and X has the meaning mentioned in claim 1.

11. Disazo compounds according to claim 1, of the general formula (1), the two formula radicals —K—X each denote a group of the formula (3i)

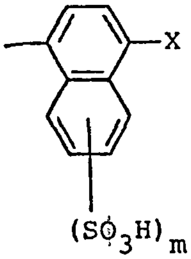
(3i)

in which m represents the number 1 or 2 and X is a fiberreactive group bonded via the group —NR— in which R denotes a hydrogen atom or a lower alkyl group.

12. Disazo compounds according to any of claims 1 to 10, characterized by that Z or X or both denote a group of the formula $—SO_2—CH_2—CH_2—Y$ in which Y is an alkanoyloxy group of 2 to 5 C-atoms, a lower alkanesulfonyloxy group, a chlorine atom, a bromine atom, a thiosulfato group, a phosphato group or the amidosulfonyloxy group.

13. Disazo compounds according to claim 1, of the general formula (1), characterized by that Z or X or both represent the vinylsulfonyl group or, preferably, a β-sulfatoethylsulfonyl group.

14. Disazo compounds according to any of claims 1 to 13, characterized by that X represents here in each case a fiber-reactive group which is bonded to K via an amino group of the formula —NR— in which R denotes a hydrogen atom or a lower alkyl group.

15. Disazo compounds according to claim 1, of the general formula

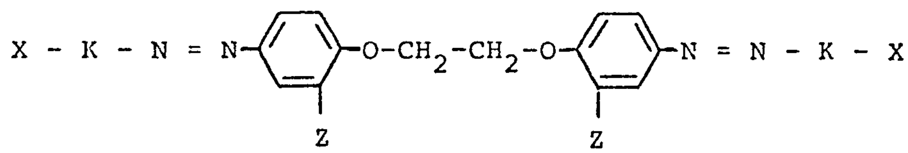

in which K, Z and X have the meanings mentioned in claim 1, or K, Z and X have the meaning preferred in any of claims 2 to 14.

16. Compounds according to claim 1 of the general formula

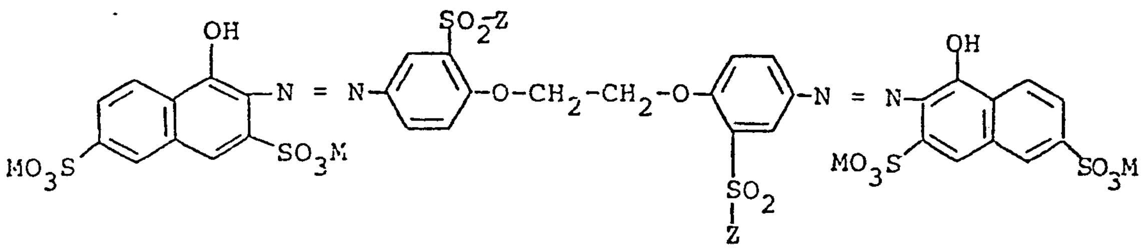

in which M and Z have the meanings mentioned in claim 1, or Z has the meaning mentioned in claim 13.

17. Compounds according to claim 1 of the general formula

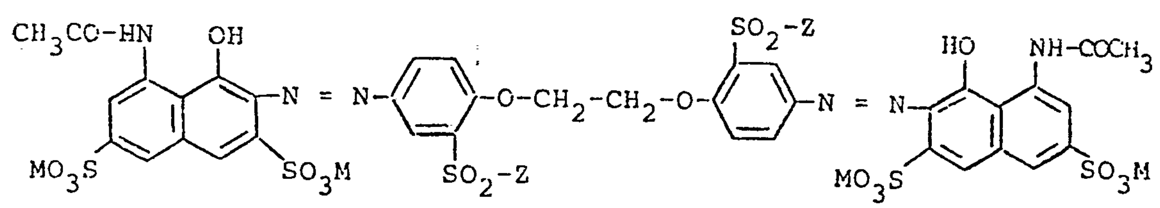

in which M and Z have the meanings mentioned in claim 1, or Z has the meaning mentioned in claim 13.

18. Compounds according to claim 1 of the general formula

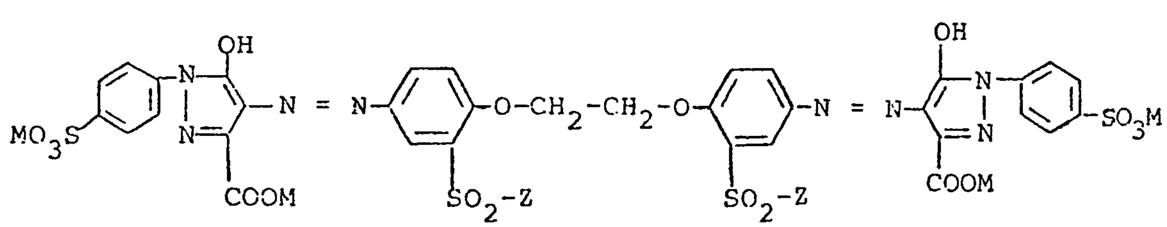

in which M and Z have the meanings mentioned in claim 1, or Z has the meaning mentioned in claim 13.

19. Compounds according to claim 1 of the general formula

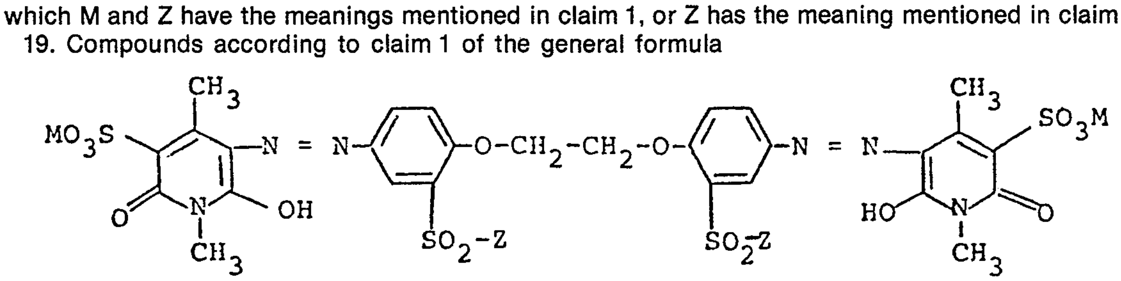

in which M and Z have the meanings mentioned in claim 1, or Z has the meaning mentioned in claim 13.

20. Compounds according to claim 1 of the general formula

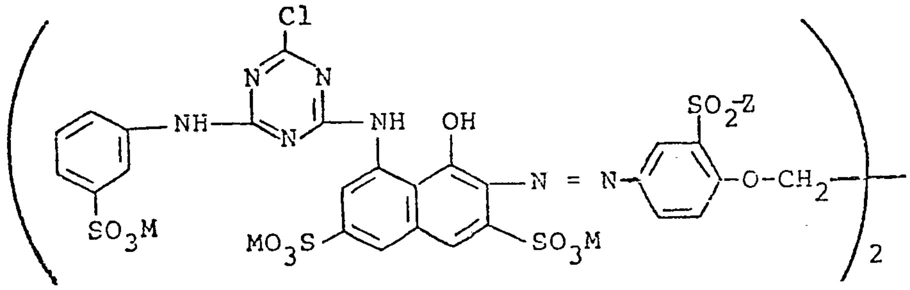

in which M and Z have the meanings mentioned in claim 1, or Z has the meaning mentioned in claim 13.

21. A process for preparing the disazo compounds of the general formula (1), of claim 1, characterized by that a tetrazonium salt of a diamine of the general formula (4)

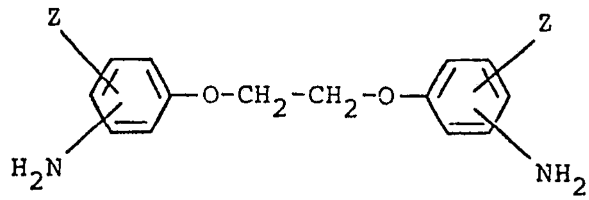

(4)

in which Z in each case has the same meaning, mentioned in claim 1, and in which the groups Z are bonded to the two benzene nuclei in each case in the ortho- or in each case in the para-position relative to the ethylenedioxy substituent, and the amino groups and the groups Z in the benzene nuclei are in each case bonded in the meta-position relative to one another, is coupled with the equivalent amount of a coupling component of the general formula (5)

$$H—K—X \qquad (5)$$

in which K and X have the meanings mentioned in claim 1, or that, in order to prepare the disazo compounds of the general formula (1) in which X denotes a fiber-reactive radical bonded via the amino group of the formula —NR— in which R is a hydrogen atom or a lower alkyl group, a tetrazonium salt of a diamino compound of the abovementioned and defined general formula (4) is coupled with the equivalent amount of a coupling component of the general formula (6)

$$H - K - \underset{R}{\underset{|}{NH}} \qquad (6)$$

in which K and R have the abovementioned meanings, and this disazo compound containing in each case an amino group of the formula —NHR, with R of the abovementioned meaning, in the radicals of the coupling components K is then reacted with the equivalent amount of an acylating agent containing the fiber-reactive group X and of the formula (7)

$$Hal—X \qquad (7)$$

in which X has the meaning mentioned in claim 1 and Hal is a halogen atom, and that, if appropriate in the case where Z and/or X in each case is the β-hydroxyethylsulfonyl group, the disazo compound of the formula (1) containing this group Z and/or X, is converted into the disazo compound of the formula (1) with Z and/or in each case equal to a β-sulfatoethylsulfonyl group by means of a sulfating agent.

22. The use of the compounds of the general formula (1), of claim 1, for dyeing and printing material, in particular fiber material, containing hydroxy groups and/or carboxamide groups.

23. Diamino compounds of the general formula (4)

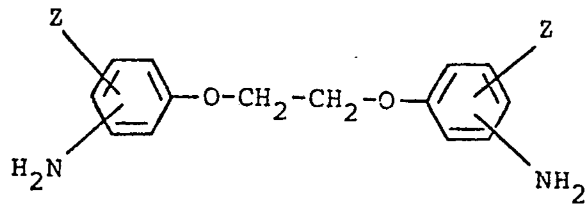

(4)

in which Z in each case has the same meaning, mentioned in claim 1, and in which the groups Z are bonded to the two benzene nuclei in each case in the ortho- or in each case in the para-position relative to the ethylenedioxy substituent, and the amino groups and the groups Z in the benzene nuclei are in each case bonded in the meta-position to each other.

24. Diamino compounds according to claim 23, of the general formula (4), characterized by that the two amino groups are here bonded to the benzene nuclei in the para-position relative to the ethylenedioxy substituent.

25. Diamino compounds according to claim 23 or 24, characterized by that the two Z's represent here the β-sulfatoethylsulfonyl group or the vinylsulfonyl group.

26. A process for preparing the diamino compounds of the general formula (4), of claim 23, characterized by that a diamine of the general formula

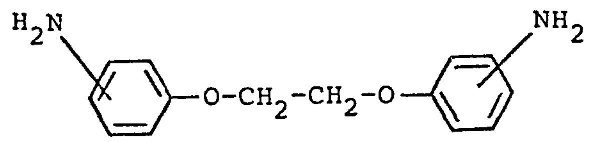

in which the amino groups in the two benzene nuclei are oriented in each case in the ortho-position or in each case in the para-position relative to the ethylenedioxy substituent, is acetylated, this compound is then chlorosulfonated to give the compound of the formula

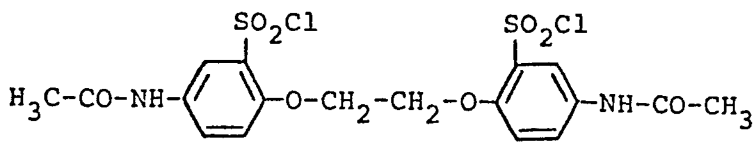

or of the formula

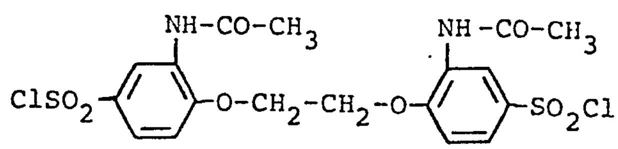

then reduced to form the sulfinic acid, oxyethylated by means of ethylene oxide or ethylene chlorohydrin and, either after preceding or in simultaneous or subsequent deacetylation, esterified and then, if appropriate, the ester compound is converted by means of an alkali into the vinyl compound of the formula (4) with Z as the vinylsulfonyl group, and that this vinyl compound is optionally reacted with a phenol, a lower dialkylamine or an alkali metal thiosulfate to give a diamino compound of the formula (4) with Z equal to a β-phenoxyethylsulfonyl, a lower β-dialkylaminoethylsulfonyl or a β-thiosulfatoethylsulfonyl group.

27. The use of a diamino compound of claim 23 as a tetrazo component to prepare disazo compounds.

**Revendications**

1. Composés disazoïques solubles dans l'eau qui répondent à la formule générale

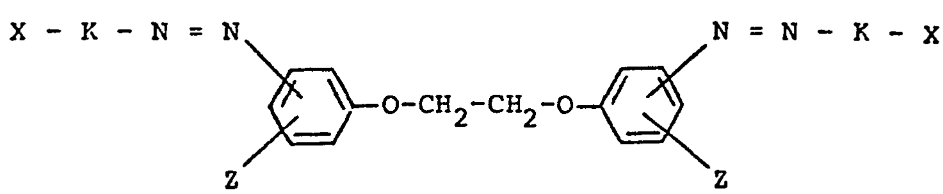

(1)

dans laquelle les deux éléments de chacun des couples K, X et Z sont, dans un même couple, identiques l'un à l'autre, les radicaux Z occupent, sur les deux noyaux benzéniques, chacun une position ortho ou chacun la position para relativement au radical éthylène-dioxy, et les radicaux azo et Z portés par un même noyau benzénique sont en position méta l'un par rapport à l'autre, et dans laquelle

K représente le radical d'un copulant contenant des radicaux carboxy, sulfato et/ou sulfo,

X représente un atome d'hydrogène ou un radical capable de réagir avec des fibres,

Z représente le radical $—SO_2—CH=CH_2$ ou un radical $—SO_2—CH_2—CH_2—Y$ dans lequel

Y représente un radical minéral ou organique pouvant être éliminé en milieu aqueux alcalin ou en milieu aqueux acide, ou représente un radical hydroxy, et

X peut également avoir l'une des significations qui viennent d'être données pour Z.

2. Composés disazoïques de formule générale 1 selon la revendication 1, caractérisés en ce que K, en tant que radical d'un copulant, représente le radical d'un copulant appartenant aux séries des amino-naphtalènes, des naphtols, des anilines, des acéto-acétylanilides, des acéto-acétyl-naphtylamides, des amino-5 pyrazoles, des pyrazolones-5, des hydroxy-6 pyridones-2 ou des diamino-2,6 pyridines qui contiennent au moins un radical sulfo et/ou un radical sulfato.

3. Composés de formule générale 1 selon la revendication 1, caractérisés en ce que K, en tant que radical d'un copulant, est un radical amino-1 naphtylène ou un radical amino-2 naphtylène qui portent au moins un radical sulfo et, ainsi que cela a été indiqué, peuvent porter un radical X, et dont les radicaux amino peuvent porter chacun un ou deux substituants pris dans l'ensemble constitué par les radicaux alkyles inférieurs éventuellement porteurs d'un aryle et/ou les radicaux aryles, ou est un radical hydroxy-1 naphtylène ou un radical hydroxy-2 naphtylène qui portent au moins un radical sulfo et qui, comme cela a été indiqué, peuvent porter un radical X, et qui peuvent en outre porter un radical amino éventuellement porteur d'un alkyle inférieur, d'un aryl-alkyle à alkyle inférieur et/ou d'un aryle, un radical acylamino ou un radical acyl-($C_1$-$C_2$)-alkyl-amino, chacun des radicaux acyles représentant en particulier le radical d'un acide alcane-carboxylique éventuellement halogéné dont la partie alcane contient de 1 à 5 atomes de carbone, d'un acide aryl-alcane-carboxylique éventuellement halogéné dont la partie alcane contient de 1 à 3 atomes de carbone, d'un acide arène-carboxylique éventuellement halogéné ou d'un acide N-aryl-carbamique éventuellement halogéné.

4. Composés disazoïques de formule générale 1 selon la revendication 1, caractérisés en ce que K, en tant que radical d'un copulant, représente un radical d'acéto-acétyl-anilide ou d'acéto-acétyl-N-naphtylamide dans lequel le radical phényle ou naphtyle porte un, deux ou trois radicaux sulfo et éventuellement, comme indiqué, un radical X, et qui peut en outre porter un ou deux substituants pris dans l'ensemble constitué par le fluor, le chlore, le brome, les alkyles inférieurs, les alcoxy inférieurs, le carboxy, les alcoxy-carbonyles inférieurs, le carbamoyle, les carbamoyles porteurs d'un ou deux substituants pris dans l'ensemble constitué par les alkyles inférieurs et/ou le phényle, l'amino et les N-alkylamino inférieurs.

5. Composés disazoïques de formule générale 1 selon la revendication 1, caractérisés en ce que K, en tant que radical d'un copulant, représente un radical amino-5 pyrazolyle-4 ou pyrazolone-5 yle-4 qui porte, en position 3, un méthyle, un carboxy, un carbamoyle, un alcoxycarbonyle inférieur ou un phényle et, en position 1, un phényle ou un naphtyle, le radical phényle portant un ou deux radicaux sulfo et éventuellement, comme indiqué, un radical X et pouvant en outre porter un ou deux substituants pris dans l'ensemble constitué par les alkyles inférieurs, les alcoxy inférieurs, le chlore, le brome, le nitro, l'acétylamino, l'amino, les N-alkylamino inférieurs et le carboxy, et le radical naphtyle portant un, deux ou trois radicaux sulfo et éventuellement un radical capable de réagir avec des fibres et pouvant en outre porter un substituant pris dans l'ensemble constitué par les alkyles inférieurs, les alcoxy inférieurs, le nitro, l'acétylamino, l'amino, les N-alkylamino inférieurs et le carboxy.

6. Composés disazoïques de formule générale 1 selon la revendication 1, caractérisés en ce que K, en tant que radical d'un copulant, représente un radical répondant à l'une des formules (2a) et (2b)

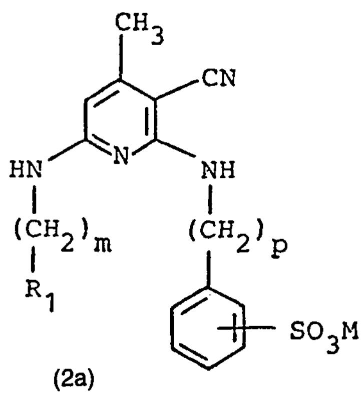

(2a)

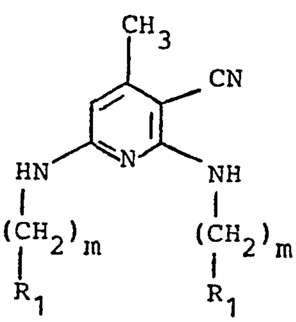

(2b)

dans lesquelles les m représentent chacun un nombre entier de 2 à 4, p représente un nombre entier de 0 à 4 et $R_1$ représente un radical sulfo ou un radical sulfato, les deux $R_1$ et les deux m, dans la formule (2b), ayant respectivement les mêmes significations, et le radical X relié à K représente ici l'hydrogène.

7. Composés disazoïques de formule générale 1 selon la revendication 1, caractérisés en ce que les radicaux —K—X représentent chacun un même radical répondant à l'une des formules (3a) et (3b)

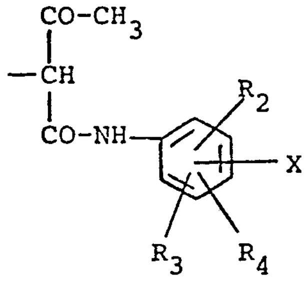
(3a)

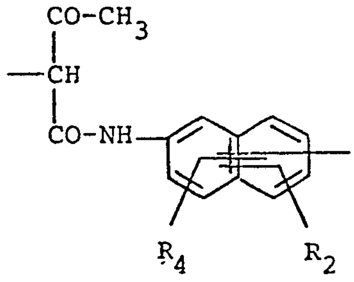
(3b)

dans lesquelles $R_2$ représente un atome d'hydrogène, un alkyle inférieur, un alcoxy inférieur, un atome de chlore, un atome de brome ou un radical sulfo, $R_3$ représente un atome d'hydrogène, un radical alkyle inférieur, un radical alcoxy inférieur, un atome de chlore ou un atome de brome, $R_4$ représente un atome d'hydrogène, un radical alkyle inférieur, un radical alcoxy inférieur ou un radical sulfo, et X a la signification qui lui a été donnée à la revendication 1.

8. Composés disazoïques de formule générale 1 selon la revendication 1, caractérisés en ce que les radicaux —K—X représentent chacun un même radical répondant à l'une des formules (3c) et (3d)

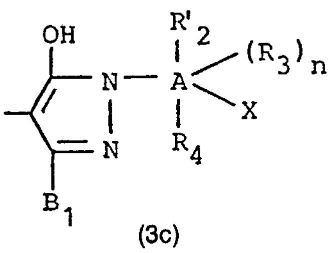
(3c)

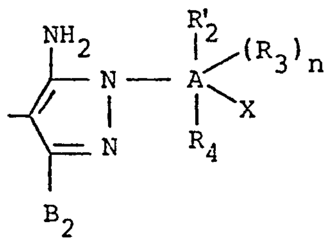
(3d)

dans lesquelles A représente le noyau benzénique ou un noyau naphtalénique, $R'_2$ représente un atome d'hydrogène, un radical alkyle inférieur, un radical alcoxy inférieur, un atome de chlore, un atome de brome, un radical alcanoylamino inférieur ou un radical sulfo, $R_3$ représente un atome d'hydrogène, un radical alkyle inférieur, un radical alcoxy inférieur, un atome de chlore ou un atome de brome, $R_4$ représente un atome d'hydrogène, un radical alkyle inférieur, un radical alcoxy inférieur ou un radical sulfo, n représente un nombre égal à 1 ou à 2, $B_1$ représente un radical méthyle, carboxy, méthoxy-carbonyle ou éthoxy-carbonyle, $B_2$ représente un radical méthyle, méthoxy-carbonyle, éthoxy-carbonyle ou carbamoyle ou un radical phényle éventuellement porteur d'un ou deux substituants pris dans l'ensemble constitué par les alkyles inférieurs, les alcoxy inférieurs, le chlore, le brome et le sulfo, et X a la signification qui lui a été donnée à la revendication 1.

9. Composés disazoïques de formule générale 1 selon la revendication 1, caractérisés en ce que les radicaux —K—X représentent chacun un même radical répondant à l'une des formules (3e) et (3f)

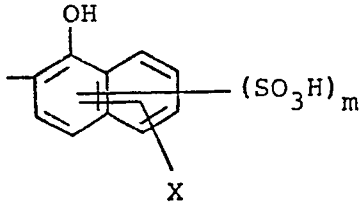
(3e)

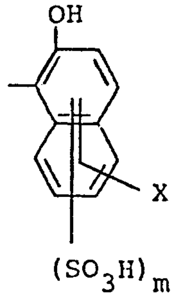
(3f)

dans lesquelles m représente un nombre égal à 1 ou à 2 et X a la signification qui lui a été donnée à la revendication 1.

10. Composés disazoïques de formule générale 1 selon la revendication 1, caractérisés en ce que les radicaux —K—X représentent chacun un même radical répondant à l'une des formules (3g) et (3h)

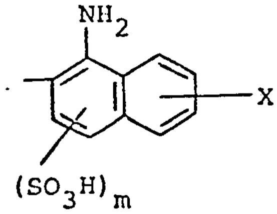

(3g)

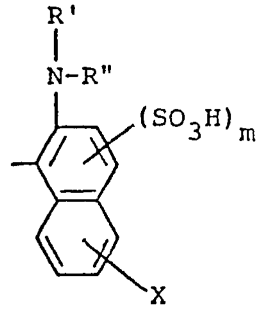

(3h)

dans lesquelles m désigne un nombre égal à 1 ou à 2, R′ représente un atome d'hydrogène ou un radical alkyle inférieur, R″ représente un atome d'hydrogène, un radical alkyle inférieur ou un radical phényle éventuellement porteur d'un ou deux substituants pris dans l'ensemble constitué par les alkyles inférieurs, les alcoxy inférieurs, le chlore, le brome et le sulfo, et X a la signification qui lui a été donnée à la revendication 1.

11. Composés disazoïques de formule générale 1 selon la revendication 1, caractérisés en ce que les deux radicaux —K—X représentent chacun un radical répondant à la formule générale (3i)

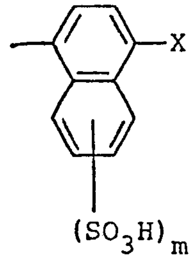

(3i)

dans laquelle m désigne un nombre égal à 1 ou à 2 et X représente un radical réactif, c'est-à-dire capable de réagir avec des fibres, relié par l'intermédiaire d'un radical —NR— dans lequel R désigne un atome d'hydrogène ou un radical alkyle inférieur.

12. Composés disazoïques selon l'une quelconque des revendications 1 à 10, caractérisés en ce que Z ou X ou les deux représentent un radical $—SO_2—CH_2—CH_2—Y$ dans lequel Y représente un radical alcanoyloxy contenant de 2 à 5 atomes de carbone, un radical alcane-sulfonyloxy inférieur, un atome de chlore, un atome de brome, un radical thiosulfato, un radical phosphato ou un radical aminosulfonyloxy.

13. Composés disazoïques de formule générale 1 selon la revendication 1, caractérisés en ce que Z ou X ou les deux représentent un radical vinylsulfonyle ou, mieux, un radical β-sulfato-éthylsulfonyle.

14. Composés disazoïques selon l'une quelconque des revendications 1 à 13, caractérisés en ce que X représente à chaque fois un radical réactif (à l'égard des fibres) qui est relié à K par un radical amino —NR— dans lequel R représente un atome d'hydrogène ou un radical alkyle inférieur.

15. Composés disazoïques selon la revendication 1 qui répondent à la formule générale

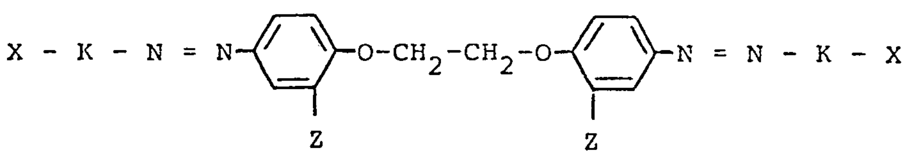

dans laquelle K, Z et X ont les significations données à la revendication 1, ou K, Z et X ont les significations préférées qui ont été données dans l'une des revendications 2 à 14.

16. Composé disazoïque selon la revendication 1 qui répond à la formule générale

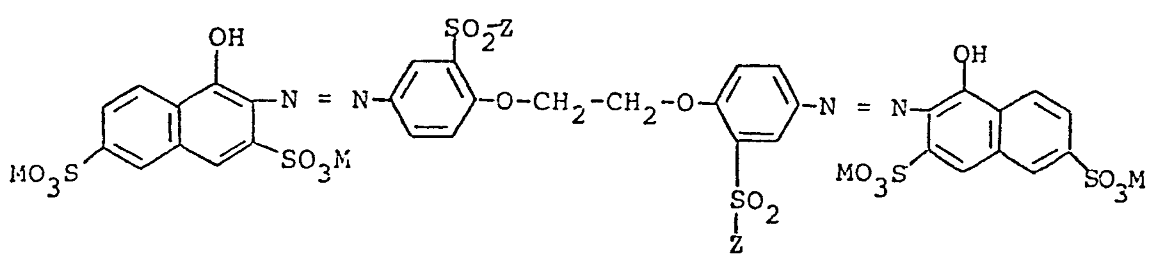

dans laquelle M et Z ont les significations données à la revendication 1, ou Z a la signification donnée à la revendication 13.

17. Composé disazoïque selon la revendication 1 qui répond à la formule générale

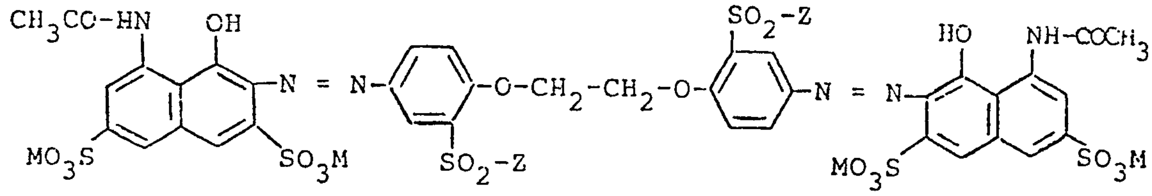

dans laquelle M et Z ont les significations données à la revendication 1, ou Z a la signification donnée à la revendication 13.

18. Composé disazoïque selon la revendication 1 qui répond à la formule générale

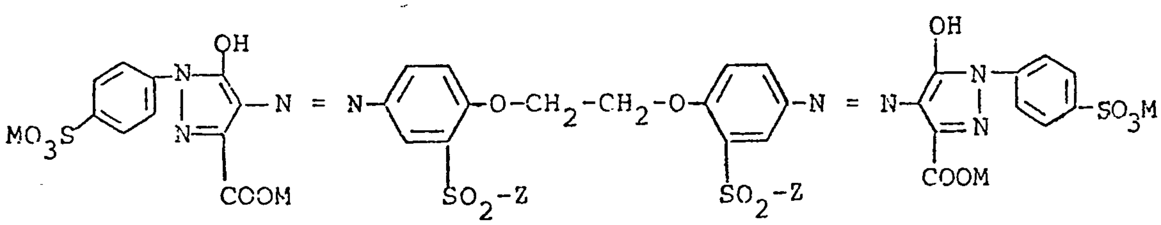

dans laquelle M et Z ont les significations données à la revendication 1, ou Z a la signification donnée à la revendication 13.

19. Composé disazoïque selon la revendication 1 qui répond à la formule générale

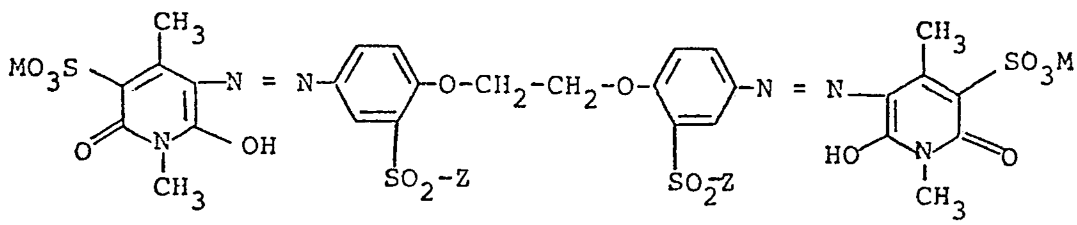

dans laquelle M et Z ont les significations données à la revendication 1, ou Z a la signification donnée à la revendication 13.

20. Composé disazoïque selon la revendication 1 qui répond à la formule générale

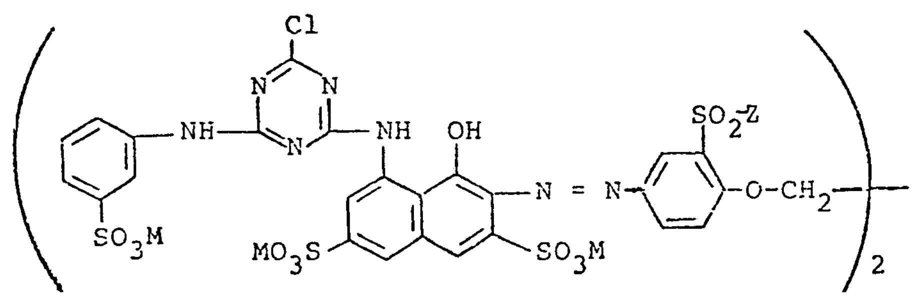

dans laquelle M et Z ont les significations données à la revendication 1, ou Z a la signification donnée à la revendication 13.

21. Procédé de préparation des composés disazoïques de formule générale 1 selon la revendication 1, procédé caractérisé en ce qu'on copule un sel de tétrazonium d'une diamine répondant à la formule générale 4

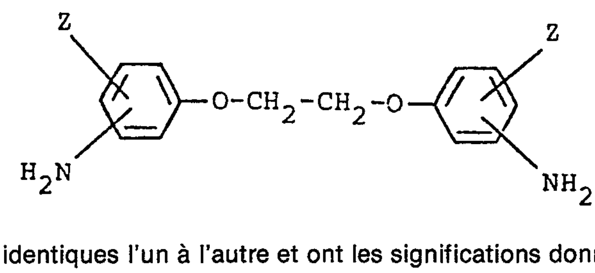

(4)

dans laquelle les Z sont identiques l'un à l'autre et ont les significations données à la revendication 1, et

dans laquelle les radicaux Z sont tous les deux en ortho ou tous les deux en para, sur leur noyau benzénique respectif, par rapport au radical éthylène-dioxy, et les radicaux amino et Z sont, sur chacun des noyaux benzéniques, en méta l'un par rapport à l'autre, avec la quantité équivalente d'un copulant répondant à la formule générale 5

$$H—K—X \qquad (5)$$

dans laquelle K et X ont les significations données à la revendication 1, ou, pour préparer des composés disazoïques de formule générale 1 dans lesquels X représente un radical réactif (à l'égard des fibres) relié par l'intermédiaire d'un radical amino —NR— dans lequel R représente un atome d'hydrogène ou un radical alkyle inférieur, on copule un sel de tétrazonium d'une diamine répondant à la formule générale 4 représentée et définie ci-dessus, avec la quantité équivalente d'un copulant répondant à la formule générale 6

$$H - K - \underset{\displaystyle R}{\underset{|}{N}}H \qquad (6)$$

dans laquelle K et R ont les significations indiquées ci-dessus, puis on fait réagir ce composé disazoïque qui contient, dans chacun de ses radicaux de copulant K, un radical amino —NHR dans lequel R a la signification précédemment donnée, avec la quantité équivalente d'un agent d'acylation contenant le radical réactif (à l'égard des fibres) X et répondant à la formule générale 7

$$Hal—X \qquad (7)$$

dans laquelle X a la signification donnée à la revendication 1 et Hal représente un atome d'halogène, et éventuellement, dans le cas où Z et/ou X représentent un radical β-hydroxy-éthylsulfonyle, on transforme les composés disazoïques de formule 1 qui contiennent ce radical Z et/ou X, au moyen d'un agent de sulfatation, en les composés disazoïques de formule 1 dans lesquels Z et/ou X représente un radical β-sulfato-éthylsulfonyle.

22. Application des composés de formule générale 1 selon la revendication 1 à la teinture et à l'impression de matières contenant des radicaux hydroxy et/ou carbamoyles, plus particulièrement des matières fibreuses de ce genre.

23. Composés diaminés répondant à la formule générale 4

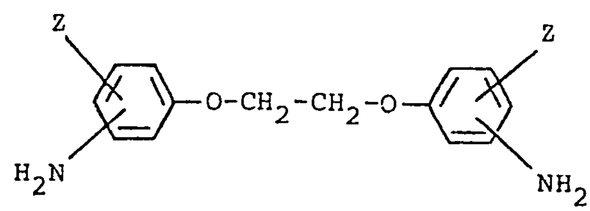

(4)

dans laquelle les Z sont identiques l'un à l'autre et ont les significations données à la revendication 1, et dans laquelle les radicaux Z sont tous les deux en ortho ou tous les deux en para, sur leur noyau benzénique respectif, par rapport au radical éthylène-dioxy, et les radicaux amino et Z sont, sur chacun des noyaux benzéniques, en méta l'un par rapport à l'autre.

24. Composés diaminés de formule générale 4 selon la revendication 23, caractérisés en ce que les deux radicaux amino sont en position para, sur les noyaux benzéniques, par rapport au radical éthylène-dioxy.

25. Composés diaminés selon l'une des revendications 23 et 24, caractérisés en ce que les deux Z représentent chacun un radical β-sulfato-éthylsulfonyle ou chacun un radical vinylsulfonyle.

26. Procédé de préparation des composés diaminés de formule générale 4 selon la revendication 23, procédé caractérisé en ce qu'on acétyle une diamine répondant à la formule générale

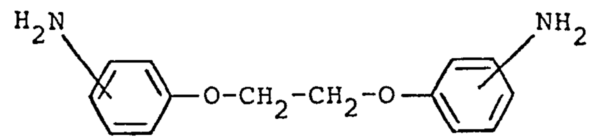

dans laquelle les radicaux amino sont chacun en position ortho ou chacun en position para par rapport au radical éthylène-dioxy sur leur noyau benzénique respectif, puis on chlorosulfone ce composé pour le convertir en un composé répondant à la formule

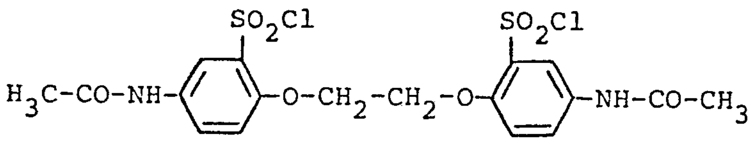

ou à la formule

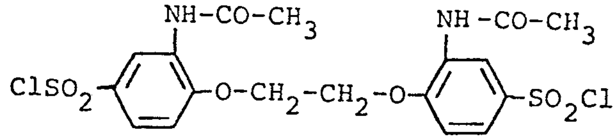

ensuite on réduit de manière à former l'acide sulfinique, on éthoxyle au moyen de l'oxyde d'éthylène ou du chloro-2 éthanol et, avant, pendant ou après la désacétylation, on estérifie, après quoi on transforme éventuellement l'ester, au moyen d'un agent alcalin, en le composé vinylique de formule 4 dans lequel Z représente un radical vinylsulfonyle, et on fait éventuellement réagir celui-ci avec un phénol, une dialkylamine inférieure ou un thiosulfate de métal alcalin de manière à obtenir un composé diaminé de formule 4 dans lequel Z représente un radical β-phénoxy-éthylsulfonyle, un radical β-dialkylamino-éthylsulfonyle inférieur ou un radical β-thiosulfato-éthylsulfonyle.

27. Application des composés diaminés selon la revendication 23 comme composantes de tétrazotation pour la préparation de composés disazoïques.